(19) Europäisches Patentamt / European Patent Office / Office européen des brevets

(11) EP 4 776 732 A1

(12) EUROPEAN PATENT APPLICATION
published in accordance with Art. 153(4) EPC

(43) Date of publication:
15.07.2026 Bulletin 2026/29

(51) International Patent Classification (IPC):
H04W 72/232 (2023.01)    H04W 16/28 (2009.01)
H04W 72/044 (2023.01)

(21) Application number: 23951499.5

(22) Date of filing: 06.09.2023

(52) Cooperative Patent Classification (CPC):
H04W 16/28; H04W 72/044; H04W 72/232

(86) International application number:
PCT/JP2023/032569

(87) International publication number:
WO 2025/052601 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NTT DOCOMO, INC.
Tokyo 100-6150 (JP)

(72) Inventors:
• MATSUMURA, Yuki
  Tokyo 100-6150 (JP)
• NAGATA, Satoshi
  Tokyo 100-6150 (JP)

(74) Representative: Hoffmann Eitle
Patent- und Rechtsanwälte PartmbB
Arabellastraße 30
81925 München (DE)

(54) TERMINAL, WIRELESS COMMUNICATION METHOD, AND BASE STATION

(57) A terminal according to an aspect of the present disclosure includes: a receiving section that receives a configuration of a physical downlink shared channel (PDSCH) and receives downlink control information (DCI) indicating a plurality of antenna ports of a demodulation reference signal (DMRS) for the PDSCH; and a control section that judges, in a case where the configuration indicates that a frequency domain orthogonal cover code having a length more than 2 is applied to the DMRS, whether to apply a sequence depending on code division multiplexing (CDM) to the DMRS based on the configuration and the DCI.

Table D-1-X: Antenna port(s) (1000 + DMRS port), *dmrs-Type*=eType1, *maxLength*=1

| One Codeword: Codeword 0 enabled, Codeword 1 disabled | | | | Two Codewords: Codeword 0 enabled, Codeword 1 enabled | | |
|---|---|---|---|---|---|---|
| Value | Number of DMRS CDM group(s) without data | DMRS port(s) | Notes | Value | Number of DMRS CDM group(s) without data | DMRS port(s) |
| 0 | 1 | 0 | | 0 | 2 | 0,1,2,3,8 |
| 1 | 1 | 1 | | 1 | 2 | 0,1,2,3,8,10 |
| 2 | 1 | 0,1 | | 2 | 2 | 0,1,2,3,8,9,10 |
| 3 | 2 | 0 | | 3 | 2 | 0,1,2,3,8,9,10,11 |
| 4 | 2 | 1 | | | | |
| 5 | 2 | 2 | | | | |
| 6 | 2 | 3 | Cat. 1 | | | |
| 7 | 2 | 0,1 | | | | |
| 8 | 2 | 2,3 | | | | |
| 9 | 2 | 0-2 | | | | |
| 10 | 2 | 0-3 | | | | |
| 11 | 2 | 0,2 | | | | |
| 12 | 1 | 8 | | | | |
| 13 | 1 | 9 | | | | |
| 14 | 1 | 8,9 | | | | |
| 15 | 2 | 8 | | | | |
| 16 | 2 | 9 | | | | |
| 17 | 2 | 10 | Cat.2 | | | |
| 18 | 2 | 11 | | | | |
| 19 | 2 | 8,9 | | | | |
| 20 | 2 | 10,11 | | | | |
| | | | | | | |
| | | | | | | |
| | | | | | | |
| 24 | 1 | 0,1,8 | | | | |
| 25 | 1 | 0,1,8,9 | | | | |
| 26 | 2 | 0,1,8 | Cat.3 | | | |
| 27 | 2 | 0,1,8,9 | | | | |
| 28 | 2 | 2,3,10 | | | | |
| 29 | 2 | 2,3,10,11 | | | | |

FIG. 8

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For orthogonalization of a layer, and the like, a reference signal (for example, demodulation reference signal (DMRS)) with a plurality of ports is used.

For future radio communication systems, it is under study to increase the number of DMRS ports as compared with that of an existing specification. In this, studies have not sufficiently been made on a DMRS sequence generation function. If a DMRS sequence is not appropriately generated, communication throughput/communication quality may deteriorate.

In view of this, an object of the present disclosure is to provide a terminal, a radio communication method, and a base station that appropriately generate a DMRS sequence.

Solution to Problem

A terminal according to an aspect of the present disclosure includes: a receiving section that receives a configuration of a physical downlink shared channel (PDSCH) and receives downlink control information (DCI) indicating a plurality of antenna ports of a demodulation reference signal (DMRS) for the PDSCH; and a control section that judges, in a case where the configuration indicates that a frequency domain orthogonal cover code having a length more than 2 is applied to the DMRS, whether to apply a sequence depending on code division multiplexing (CDM) to the DMRS based on the configuration and the DCI.

Advantageous Effects of Invention

An aspect of the present disclosure enables a DMRS sequence to be appropriately generated.

Brief Description of Drawings

[FIG. 1] FIGS. 1A and 1B show examples of an existing DMRS port table for DMRS configuration type 1/2 for PDSCH.
[FIG. 2] FIGS. 2A and 2B show examples of an existing DMRS port table for DMRS configuration type 1/2 for PUSCH.
[FIG. 3] FIGS. 3A to 3C are diagrams to show examples of new OCCs (Orthogonal Cover Codes).

[FIG. 4] FIGS. 4A and 4B are diagrams to show examples of association between CDM groups, DMRS ports, and OCCs, in enhanced type 1/enhanced type 2.

[FIG. 5] FIGS. 5A and 5B each show an example of mapping, to REs, of DMRSs and FD-OCCs in DMRS enhanced type 1.

[FIG. 6] FIGS. 6A and 6B each show an example of mapping, to REs, of DMRSs and FD-OCCs in DMRS enhanced type 2.

[FIG. 7] FIG. 7 shows another example of the mapping, to REs, of DMRSs and FD-OCCs in DMRS enhanced type 2.

[FIG. 8] FIG. 8 shows an example of an antenna port table for PDSCH in a case of DMRS type = enhanced type 1 and maximum length = 1.

[FIG. 9] FIG. 9 shows a first part of an example of an antenna port table for PDSCH in a case of DMRS type = enhanced type 1 and maximum length = 2.

[FIG. 10] FIG. 10 shows a second part of the example of the antenna port table for PDSCH in the case of DMRS type = enhanced type 1 and maximum length = 2.

[FIG. 11] FIG. 11 shows a third part of the example of the antenna port table for PDSCH in the case of DMRS type = enhanced type 1 and maximum length = 2.

[FIG. 12] FIG. 12 shows a first part of an example of an antenna port table for PDSCH in a case of DMRS type = enhanced type 2 and maximum length = 1.

[FIG. 13] FIG. 13 shows a second part of the example of the antenna port table for PDSCH in the case of DMRS type = enhanced type 2 and maximum length = 1.

[FIG. 14] FIG. 14 shows a first part of an example of a PDSCH antenna port table in a case of DMRS type = enhanced type 2 and maximum length = 2.

[FIG. 15] FIG. 15 shows a second part of the example of the PDSCH antenna port table in the case of DMRS type = enhanced type 2 and maximum length = 2.

[FIG. 16] FIG. 16 shows a third part of the example of the PDSCH antenna port table in the case of DMRS type = enhanced type 2 and maximum length = 2.

[FIG. 17] FIG. 17 shows a fourth part of the example of the PDSCH antenna port table in the case of DMRS type = enhanced type 2 and maximum length = 2.

[FIG. 18] FIG. 18 shows a fifth part of the example of the PDSCH antenna port table in the case of DMRS type = enhanced type 2 and maximum length = 2.

[FIG. 19] FIG. 19 shows an example of an antenna port table for PUSCH in a case of transform precoding disabled, DMRS type = enhanced type 1, maximum length = 1, and rank = 1.

[FIG. 20] FIG. 20 shows an example of an antenna port table for PUSCH in a case of transform precoding disabled, DMRS type = enhanced type 1, maximum length = 1, and rank = 2.

[FIG. 21] FIG. 21 shows an example of an antenna port table for PUSCH in a case of transform precoding disabled, DMRS type = enhanced type 1, maximum length = 1, and rank = 3.

[FIG. 22] FIG. 22 shows an example of an antenna port table for PUSCH in a case of transform precoding disabled, DMRS type = enhanced type 1, maximum length = 1, and rank = 4.

[FIG. 23] FIG. 23 shows an example of an antenna port table for PUSCH in a case of transform precoding disabled, DMRS type = enhanced type 1, maximum length = 1, and rank = 5.

[FIG. 24] FIG. 24 shows an example of an antenna port table for PUSCH in a case of transform precoding disabled, DMRS type = enhanced type 1, maximum length = 1, and rank = 6.

[FIG. 25] FIG. 25 shows an example of an antenna port table for PUSCH in a case of transform precoding disabled, DMRS type = enhanced type 1, maximum length = 1, and rank = 7.

[FIG. 26] FIG. 26 shows an example of an antenna port table for PUSCH in a case of transform precoding disabled, DMRS type = enhanced type 1, maximum length = 1, and rank = 8.

[FIG. 27] FIG. 27 shows an example of an antenna port table for PUSCH in a case of transform precoding disabled, DMRS type = enhanced type 1, maximum length = 2, and rank = 1.

[FIG. 28] FIG. 28 shows an example of an antenna port table for PUSCH in a case of transform precoding disabled, DMRS type = enhanced type 1, maximum length = 2, and rank = 2.

[FIG. 29] FIG. 29 shows an example of an antenna port table for PUSCH in a case of transform precoding disabled, DMRS type = enhanced type 1, maximum length = 2, and rank = 3.

[FIG. 30] FIG. 30 shows an example of an antenna port table for PUSCH in a case of transform precoding disabled, DMRS type = enhanced type 1, maximum length = 2, and rank = 4.

[FIG. 31] FIG. 31 shows an example of an antenna port table for PUSCH in a case of transform precoding disabled, DMRS type = enhanced type 1, maximum length = 2, and rank = 5.

[FIG. 32] FIG. 32 shows an example of an antenna port table for PUSCH in a case of transform precoding disabled, DMRS type = enhanced type 1, maximum length = 2, and rank = 6.

[FIG. 33] FIG. 33 shows an example of an antenna port table for PUSCH in a case of transform precoding disabled, DMRS type = enhanced type 1, maximum length = 2, and rank = 7.

[FIG. 34] FIG. 34 shows an example of an antenna port table for PUSCH in a case of transform precoding disabled, DMRS type = enhanced type 1, maximum length = 2, and rank = 8.

[FIG. 35] FIG. 35 shows an example of an antenna port table for PUSCH in a case of transform precoding disabled, DMRS type = enhanced type 2, maximum length = 1, and rank = 1.

[FIG. 36] FIG. 36 shows an example of an antenna port table for PUSCH in a case of transform precoding disabled, DMRS type = enhanced type 2, maximum length = 1, and rank = 2.

[FIG. 37] FIG. 37 shows an example of an antenna port table for PUSCH in a case of transform precoding disabled, DMRS type = enhanced type 2, maximum length = 1, and rank = 3.

[FIG. 38] FIG. 38 shows an example of an antenna port table for PUSCH in a case of transform precoding disabled, DMRS type = enhanced type 2, maximum length = 1, and rank = 4.

[FIG. 39] FIG. 39 shows an example of an antenna port table for PUSCH in a case of transform precoding disabled, DMRS type = enhanced type 2, maximum length = 1, and rank = 5.

[FIG. 40] FIG. 40 shows an example of an antenna port table for PUSCH in a case of transform precoding disabled, DMRS type = enhanced type 2, maximum length = 1, and rank = 6.

[FIG. 41] FIG. 41 shows an example of an antenna port table for PUSCH in a case of transform precoding disabled, DMRS type = enhanced type 2, maximum length = 1, and rank = 7.

[FIG. 42] FIG. 42 shows an example of an antenna port table for PUSCH in a case of transform precoding disabled, DMRS type = enhanced type 2, maximum length = 1, and rank = 8.

[FIG. 43] FIG. 43 shows a first part of an example of an antenna port table for PUSCH in a case of transform precoding disabled, DMRS type = enhanced type 2, maximum length = 2, and rank = 1.

[FIG. 44] FIG. 44 shows a second part of the example of the antenna port table for PUSCH in the case of transform precoding disabled, DMRS type = enhanced type 2, maximum length = 2, and rank = 1.

[FIG. 45] FIG. 45 shows a first part of an example of an antenna port table for PUSCH in a case of transform precoding disabled, DMRS type = enhanced type 2, maximum length = 2, and rank = 2.

[FIG. 46] FIG. 46 shows a second part of the example of the antenna port table for PUSCH in the case of transform precoding disabled, DMRS type = enhanced type 2, maximum length = 2, and rank = 2.

[FIG. 47] FIG. 47 shows a first part of an example of an antenna port table for PUSCH in a case of transform precoding disabled, DMRS type = enhanced type 2, maximum length = 2, and rank = 3.

[FIG. 48] FIG. 48 shows a second part of the example of the antenna port table for PUSCH in the case of transform precoding disabled, DMRS type = enhanced type 2, maximum length = 2, and rank = 3.

[FIG. 49] FIG. 49 shows an example of an antenna port table for PUSCH in a case of transform precoding disabled, DMRS type = enhanced type 2, maximum length = 2, and rank = 4.

[FIG. 50] FIG. 50 shows an example of an antenna port table for PUSCH in a case of transform precoding disabled, DMRS type = enhanced type 2, maximum length = 2, and rank = 5.

[FIG. 51] FIG. 51 shows an example of an antenna port table for PUSCH in a case of transform precoding disabled, DMRS type = enhanced type 2, maximum length = 2, and rank = 6.

[FIG. 52] FIG. 52 shows an example of an antenna port table for PUSCH in a case of transform precoding disabled, DMRS type = enhanced type 2, maximum length = 2, and rank = 7.

[FIG. 53] FIG. 53 shows an example of an antenna port table for PUSCH in a case of transform precoding disabled, DMRS type = enhanced type 2, maximum length = 2, and rank = 8.

[FIG. 54] FIG. 54 is a diagram to show an example of a schematic structure of a radio communication system according to one embodiment.

[FIG. 55] FIG. 55 is a diagram to show an example of a structure of a base station according to one embodiment.

[FIG. 56] FIG. 56 is a diagram to show an example of a structure of a user terminal according to one embodiment.

[FIG. 57] FIG. 57 is a diagram to show an example of a hardware structure of the base station and the user terminal according to one embodiment.

[FIG. 58] FIG. 58 is a diagram to show an example of a vehicle according to one embodiment.

Description of Embodiments

(DMRS)

A front-loaded demodulation reference signal (DMRS) is the first DMRS (in the first symbol or a symbol near the first symbol) for faster demodulation. An additional DMRS can be configured by RRC for a high-speed moving terminal (user terminal, User Equipment (UE)) or a high modulation and coding scheme (MCS)/rank. A frequency location of the additional DMRS is the same as that of the front-loaded DMRS.

DMRS mapping type A or B is configured for a time domain. In DMRS mapping type A, DMRS location l_0 is counted by a symbol index in a slot. I_0 is configured by a parameter (dmrs-TypeA-Position) in an MIB or a common serving cell configuration (ServingCellConfigCommon). DMRS location 0 (reference point I) means the first symbol of the slot or each frequency hop. In DMRS mapping type B, DMRS location I_0 is counted by a symbol index in a PDSCH/PUSCH. I_0 is always 0. DMRS location 0 (reference point I) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding = disabled) and DFT-S-OFDM (transport precoding = enabled). DMRS configuration type 2 is applicable to only CP-OFDM.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

A double-symbol DMRS is used for more DMRS ports (especially for Multi User Multi Input Multi Output (MU-MIMO)). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.

- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same resource element (RE, time and frequency resources) are referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC (Frequency Domain OCC) having a length of 2. In a plurality of DMRS CDM groups (two DMRS CDM groups), two DMRS ports are multiplexed by frequency division multiplexing (FDM).

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC (Time Domain OCC). In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

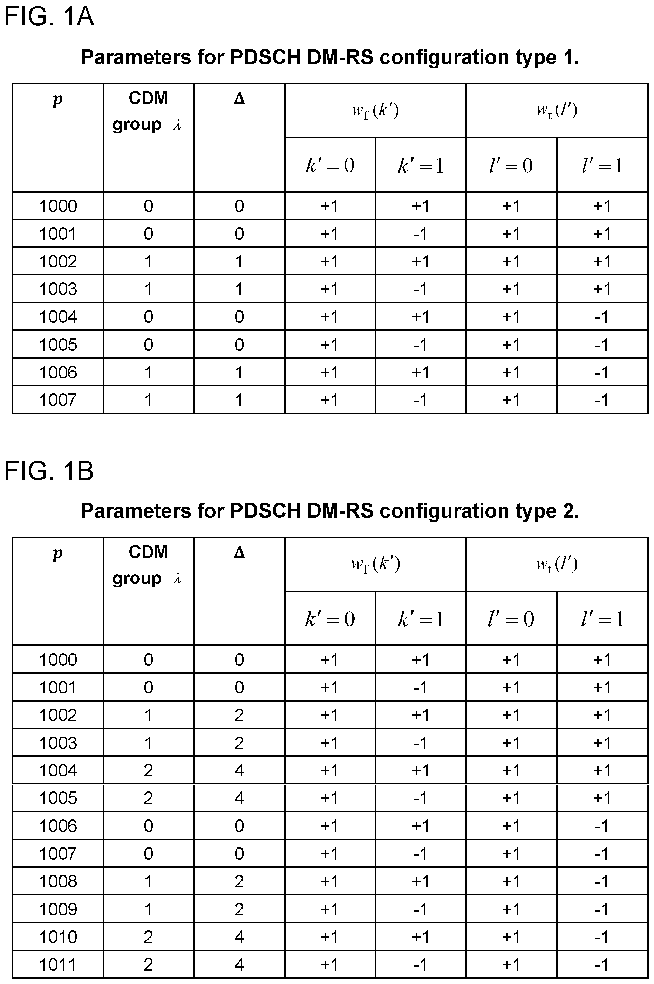

In parameters for a PDSCH DMRS (existing table, existing DMRS port table, FIG. 1), DMRS ports 1000 to 1007 and DMRS ports 1000 to 1011 can be used for DMRS configuration type 1 and DMRS configuration type 2, respectively.

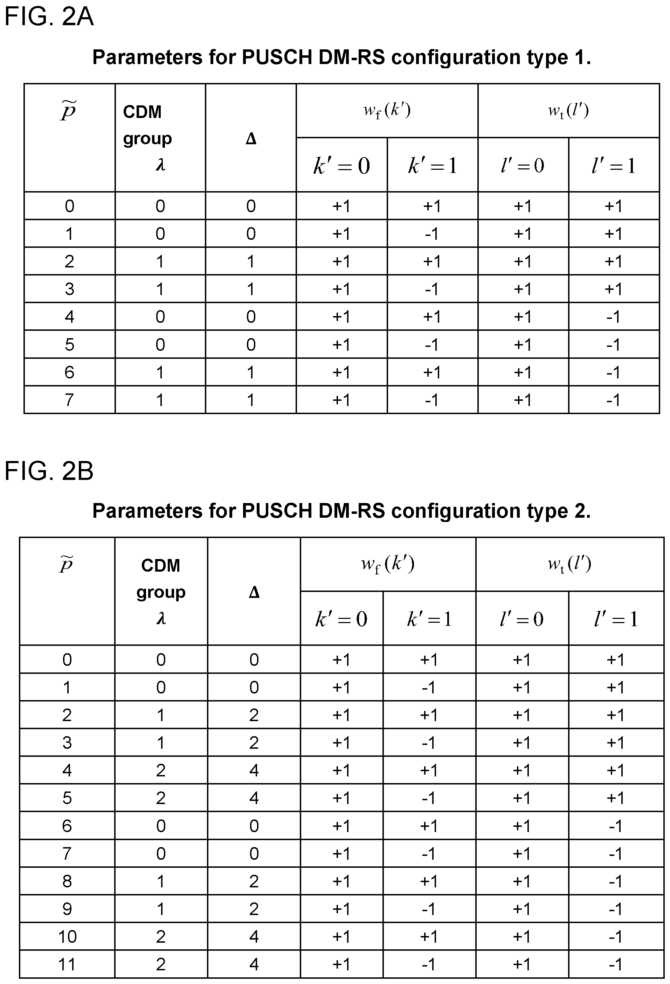

In parameters for a PUSCH DMRS (existing table, existing DMRS port table, FIG. 2), DMRS ports 0 to 7 and DMRS ports 0 to 11 can be used for DMRS configuration type 1 and DMRS configuration type 2, respectively.

(Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), DMRS ports/CSI-RS ports that are different between layers may be configured. For multi user MIMO (MU-MIMO), DMRS ports/CSI-RS ports that are different between layers in one UE and different between UEs may be configured.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol DMRS.

In the present disclosure, an OCC, an orthogonal code, orthogonalization, and a cyclic shift may be interchangeably interpreted.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2 + 2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to 2 REs adjacent to each other in a frequency direction and applying a TD-OCC ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) $w_f(k')$ for an FD-OCC and a parameter (which may be referred to as a sequence element or the like) $w_t(l')$ for a TD-OCC.

Both of the TD-OCC and FD-OCC for the DMRS of Rel-15 NR correspond to an OCC of a sequence length (which may be referred to as an OCC length) = 2. For example, Rel-15 type 1/type 2 DMRS ports may be defined by DMRS ports with an FD-OCC length of 2 (for example, DMRS ports with FD-OCC length = 2).

Thus, possible values of each of k' and l' described above are 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two existing DMRS port tables for PDSCH (association between antenna port numbers and parameters) described above correspond to respective DMRS configuration types 1 and 2. Note that p and $\Delta$ indicate an antenna port number and a parameter for shifting (offsetting) a frequency resource, respectively.

For example, $\{w_f(0), w_f(1)\} = \{+1, +1\}$ and $\{w_f(0), w_f(1)\} = \{+1, -1\}$ are applied to antenna ports 1000 and 1001, respectively, thereby orthogonalizing the antenna ports by using an FD-OCC.

$\Delta$ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

$\{w_t(0), wt(1)\} = \{+1, +1\}$ and $\{w_t(0), wt(1)\} = \{+1, -1\}$ are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.

{Case 1} Single-symbol DMRS of DMRS configuration type 1

A total number of DMRS ports is 2 (with comb/FDM) x 2 (with FD OCC) = 4 ports.

{Case 2} Double-symbol DMRS of DMRS configuration type 1

A total number of DMRS ports is 2 (with comb/FDM) x 2 (with FD OCC) x 2 (with TD OCC) = 8 ports.

{Case 3} Single-symbol DMRS of DMRS configuration type 2

A total number of DMRS ports is 3 (with FDM) x 2 (with FD OCC) = 6 ports.

{Case 4} Double-symbol DMRS of DMRS configuration type 2

A total number of DMRS ports is 3 (with comb) x 2 (with FD OCC) x 2 (with TD OCC) = 12 ports.

For Rel. 18, it is studied that the total numbers of DMRS ports are doubled to 8, 16, 12, and 24 for Cases 1, 2, 3, and 4, respectively.

For the increased numbers of DMRS ports, the following five options (methods for increasing the number of DMRS ports) are under study.

<Option 1>

- Introduction of a new OCC having a length (for example, 4 or 6) greater than that of an existing OCC.

In Option 1, items to be studied include a possibility of performance degradation, a possibility of scheduling restriction, backward compatibility, and the like in a case of a large delay spread.

<Option 2>

- Use of a TD-OCC over a plurality of non-consecutive DMRS symbols (for example, a TD-OCC over a front-loaded DMRS/additional DMRS).

In Option 2, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

<Option 3>

- Increasing the number of CDM groups (for example, increasing the number of combs/times of FDM).

In Option 3, items to be studied include a possibility of performance degradation, backward compatibility, and the like in a case of a large delay spread.

<Option 4>

- Increasing the number of orthogonal DMRS ports by reusing additional DMRS symbols.

In Option 4, items to be studied include a possibility of performance degradation, a possibility of a limited DMRS configuration (for example, the number of additional DMRSs is limited), backward compatibility, and the like in a case of a high UE speed.

<Option 5>

- Use of a TD-OCC over a plurality of non-consecutive DMRS symbols, the TD-OCC being combined with an FD-OCC/FDM (reusing additional DMRS symbols to improve channel estimation performance).

In Option 5, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

Option 1/3 may be supported. In addition, a TD OCC may be supported. A difference between Options 2 and 5 may be whether to support RRC-based semi-static switching between an FD-OCC and a TD-OCC or DCI-based dynamic switching between an FD-OCC and a TD-OCC.

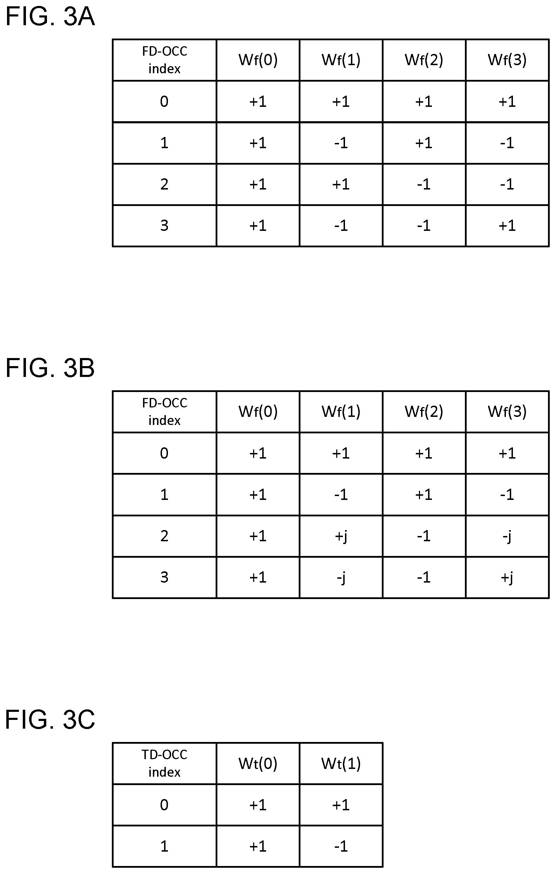

In Option 5 for the methods for increasing the number of DMRS ports described above, as shown in an example in FIG. 3, a new FD-OCC having a length of 4 may be applied, a new TD-OCC having a length of 2 may be applied to a plurality of non-consecutive DMRS symbols, and the number of DMRS ports in one CDM group may be 4. In this case, a reception side decodes one of the FD-OCC and the TD-OCC, thereby allowing signals to be separated from each other, which has an advantage over Option 1/3. For example, the reception side can perform decoding by using only the FD-OCC when using the TD-OCC causes issues such as a case that a characteristic (orthogonality) deteriorates in high-speed movement, a case that channel estimation cannot be started even when only a front-loaded DMRS symbol is received, which requires an additional DMRS symbol to be received, thus leading to delay in PDSCH decoding, and the like. For example, the reception side can perform decoding by using only the TD-OCC when using the FD-OCC causes issues such as a case that a characteristic (orthogonality) deteriorates in a case of a large delay spread, and the like.

In Option 5 for increasing the number of DMRS ports described above, a new FD-OCC having a length of 6 may be applied, and a new TD-OCC having a length of 2 may be applied to a plurality of non-consecutive DMRS symbols.

In this manner, Rel. 18 or later versions supports a new FD-OCC longer than 2. DMRS ports for type 1/type 2 for Rel. 18 or later versions may be referred to as, for example, Rel-18 enhanced type 1/enhanced type 2 DMRS ports. Enhanced type 1/enhanced type 2 may be referred to as eType 1/eType 2.

For example, Rel-18 eType 1/eType 2 DMRS ports may be defined by DMRS ports with an FD-OCC length longer than 2 (for example, DMRS ports with FD-OCC length > 2). For example, the FD-OCC length for the Rel-18 eType 1/eType 2 DMRS ports may equal 4.

Note that a type 1/type 2 DMRS port with an FD-OCC length = 2 defined by Rel. 15 may be referred to as a Rel-15 type 1/type 2 DMRS port.

A Rel-18 eType 1 DMRS port may obtain port index p = #1000 to #1015. For example, the same DMRS port indices (DMRS ports #1000 to #1007) as those of Rel-15 DMRS ports may be used for DMRS ports with new FD-OCCs #0 and #1. DMRS port indices (DMRS ports #1008 to #1015) different from those of Rel-15 DMRS ports may be used for DMRS ports with new FD-OCCs #2 and #3.

A Rel-18 eType 2 DMRS port may obtain port index p = #1000 to #1023. The same DMRS port indices (DMRS ports #1000 to #1011) as those of Rel-15 DMRS ports may be used for DMRS ports with new FD-OCCs #0 and #1. DMRS port indices (DMRS ports #1012 to #1023) different from those of Rel-15 DMRS ports may be used for DMRS ports with new FD-OCCs #2 and #3.

(New OCC for PDSCH/PUSCH DMRS)

For Rel. 18, as new OCCs for PDSCH/PUSCH DMRS (enhanced type 1/enhanced type 2 DMRS), a length-4 FD-OCC and a length-2 TD-OCC are supported. FIGS. 3A to 3C are diagrams to show examples of such new OCCs. The FD-OCC and the TD-OCC may each be simply referred to as an OCC.

As shown in FIG. 3A, a length-4 FD-OCC based on a four-by-four Walsh matrix (sequence) may be defined. In FIG. 3A, four sequences are obtained for FD-OCC index i = {0, 1, 2, 3}. The Walsh matrix may be interpreted as a Hadamard code. The OCC based on the Walsh matrix (sequence) is beneficial to DL reception (for example, reception of a PDSCH).

As shown in FIG. 3B, a length-4 OCC based on a cyclic shift may be defined. In FIG. 3B, four sequences are obtained by using cyclic shifts {i·0, i·π, i·π/2, i·3π/2} for FD-OCC index i = {0, 1, 2, 3}. The OCC based on the cyclic shift is beneficial to UL transmission (for example, transmission of a PUSCH).

As shown in FIG. 3C, a length-2 TD-OCC may be defined. In FIG. 3C, two sequences are obtained for TD-OCC index i = {0, 1}.

In association with the OCCs shown in FIG. 3, a table (association between port indices, CDM group indices, and new OCC indices) for an enhanced type 1/enhanced type 2 DMRS may be defined. A PDSCH port index may be indicated by a number obtained by adding 1000 to a PUSCH port index.

The new FD-OCC may be any one of the OCCs described above.

In FIGS. 3A and 3B, each of the first and second halves of length-4 OCC #0 (OCC corresponding to OCC index 0) and each of the first and second halves of length-4 OCC #1 (OCC corresponding to OCC index 1) are the same as length-2 OCC #0 (OCC corresponding to OCC index 0) and length-2 OCC #1 (OCC corresponding to OCC index 1) shown in FIG. 3C, respectively, for example.

In the present disclosure, an OCC (FD-OCC/TD-OCC) corresponding to OCC index i may be referred to as OCC #i.

Part of the plurality of sequences of the new FD-OCC may be associated with a Rel-15 DMRS port index.

When a length-2 FD-OCC is used, a Rel-15 DMRS port table for DMRS configuration type 1 and a Rel-15 DMRS port table for DMRS configuration type 2 may be used.

Enhanced DMRS configuration type 1 (DMRS enhanced type 1, DMRS enhanced type = 1, DMRS eType 1) uses frequency domain arrangement of DMRS configuration type 1 (DMRS type 1, DMRS type = 1, DMRS Type 1) and a new FD-OCC. Enhanced DMRS configuration type 2 (DMRS enhanced type 2, DMRS enhanced type = 2, DMRS eType 2) uses frequency domain arrangement of DMRS configuration type 2 (DMRS type 2, DMRS type = 2, DMRS Type 2) and a new FD-OCC.

In the present disclosure, an existing DMRS, an existing DMRS function, an existing DMRS type, an existing DMRS configuration type, dmrs-Type, DMRS configuration type 1/2, and Rel-15 DMRS type may be interchangeably interpreted. In the present disclosure, an existing DMRS configuration type being configured, dmrs-Type being configured, and existing DMRS configuration type 1 or 2 being configured may be interchangeably interpreted. In the present disclosure, DMRS configuration type 1, DMRS type 1, DMRS type = 1, and DMRS Type 1 may be interchangeably interpreted. In the present disclosure, DMRS configuration type 2, DMRS type 2, DMRS type = 2, and DMRS Type 2 may be interchangeably interpreted.

In the present disclosure, an enhanced DMRS, an enhanced DMRS function, an enhanced DMRS type, an enhanced DMRS configuration type, enhanced-dmrs-Type_r18, enhanced DMRS configuration type 1/2, a type of DMRS with a length-4 FD-OCC, and Rel-18 DMRS type may be interchangeably interpreted. In the present disclosure, an enhanced DMRS configuration type being configured, enhanced-dmrs-Type_r18 being configured, and enhanced DMRS configuration type 1 or 2 being configured may be interchangeably interpreted. In the present disclosure, enhanced DMRS configuration type 1, DMRS enhanced type 1, DMRS enhanced type = 1, and DMRS eType 1 may be interchangeably interpreted. In the present disclosure, enhanced DMRS configuration type 2, DMRS enhanced type 2, DMRS enhanced type = 2, and DMRS eType 2 may be interchangeably interpreted.

In the present disclosure, a maximum DMRS length, maxLength, and the maximum number of OFDM symbols of a front-loaded DMRS may be interchangeably interpreted.

In the present disclosure, an existing OCC, an existing FD-OCC, a length-2 FD-OCC, a Rel-15 FD-OCC, and $w_f(k')$ may be interchangeably interpreted. In the present disclosure, an existing DMRS port and a DMRS port applied with an existing FD-OCC may be interchangeably interpreted.

In the present disclosure, a new OCC, a new FD-OCC, an FD-OCC longer than 2, a Rel-18 FD-OCC, $w_f(k')$, and a length-4 FD-OCC may be interchangeably interpreted. In the present disclosure, a new DMRS port and a DMRS port applied with a new FD-OCC may be interchangeably interpreted.

(CDM Group)

As described above, a plurality of DMRS ports mapped to the same RE (time and frequency resources) may be referred to as a DMRS CDM group.

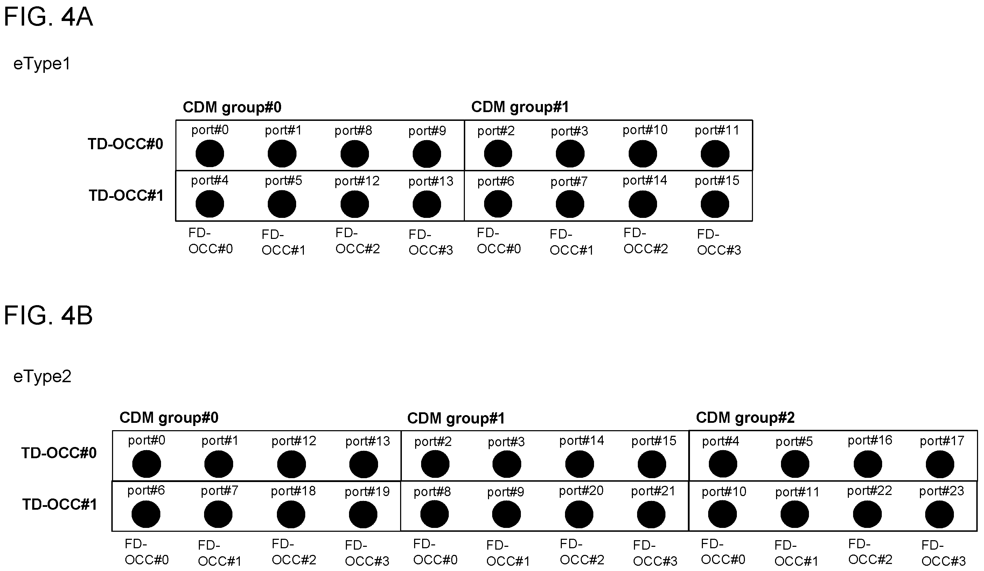

FIG. 4A is a diagram to show an example of association between CDM groups, DMRS ports, and OCCs, in enhanced type 1. FIG. 4B is a diagram to show an example of association between CDM groups, DMRS ports, and OCCs, in enhanced type 2. The DMRS ports of FIGS. 4A and 4B may be referred to as enhanced DMRS ports. Note that FIGS. 4A and 4B are applicable to both a single-symbol DMRS and a double-symbol DMRS.

As shown in FIG. 4A, for DMRS configuration enhanced type 1 and a single-symbol DMRS, eight DMRS ports (ports #0 to #3, #8 to #11) can be used. In each DMRS CDM group (each of CDM groups #0 to #1), four DMRS ports (ports #0 to #1, #8 to #9, ports #2 to #3, #10 to #11) are multiplexed by a length-4 FD-OCC (FD-OCCs #0 to #3). In a plurality of DMRS CDM groups (two DMRS CDM groups (CDM groups #0 to #1)), two DMRS ports are multiplexed by FDM.

As shown in FIG. 4A, in a case of DMRS configuration enhanced type 1 and a double-symbol DMRS, eight DMRS ports (ports #4 to #7, #12 to #15) can be further used. In each DMRS CDM group (each of CDM groups #0 to #1), four DMRS ports (ports #4 to #5, #12 to #13, ports #6 to #7, #14 to #15) are multiplexed by a length-4 FD-OCC (FD-OCCs #0 to #3). In a plurality of DMRS CDM groups (two DMRS CDM groups (CDM groups #0 to #1)), two DMRS ports are multiplexed by FDM. Furthermore, two DMRS ports in a time direction are multiplexed by a length-2 TD-OCC (TD-OCCs #0 to #1). In other words, a plurality of (two) CDM groups with the same index are multiplexed by TDM.

In enhanced type 1 shown in FIG. 4A, DMRS ports corresponding to CDM group #0 are {ports #0, #1, #8, #9}, {ports #4, #5, #12, #13} and DMRS ports corresponding to CDM group #1 are {ports #2, #3, #10, #11}, {ports #6, #7, #14, #15}.

As shown in FIG. 4B, for DMRS configuration enhanced type 2 and a single-symbol DMRS, twelve DMRS ports (ports #0 to #5, #12 to #17) can be used. In each DMRS CDM group (each of CDM groups #0 to #2), four DMRS ports (ports #0 to #1, #12 to #13, ports #2 to #3, #14 to #15, ports #4 to #5, #16 to #17) are multiplexed by a length-4 FD-OCC (FD-OCCs #0 to #3). In a plurality of DMRS CDM groups (three DMRS CDM groups (CDM groups #0 to #2)), three DMRS ports are multiplexed by FDM.

As shown in FIG. 4B, in a case of DMRS configuration enhanced type 2 and a double-symbol DMRS, twelve DMRS ports (ports #6 to #11, #18 to #23) can be further used. In each DMRS CDM group (each of CDM groups #0 to #2), four DMRS ports (ports #6 to #7, #18 to #19, ports #8 to #9, #20 to #21, ports #10 to #11, #22 to #23) are multiplexed by a length-4 FD-OCC (FD-OCCs #0 to #3). In a plurality of DMRS CDM groups (three DMRS CDM groups (CDM groups #0 to #2)), three DMRS ports are multiplexed by FDM. Furthermore, two DMRS ports in a time direction are multiplexed by a length-2 TD-OCC (TD-OCCs #0 to #1). In other words, a plurality of (two) CDM groups with the same index are multiplexed by TDM.

In enhanced type 2 shown in FIG. 4B, DMRS ports corresponding to CDM group #0 are {ports #0, #1, #12, #13}, {ports #6, #7, #18, #19}, DMRS ports corresponding to CDM group #1 are {ports #2, #3, #14, #15}, {ports #8, #9, #20, #21}, and DMRS ports corresponding to CDM group #2 are {ports #4, #5, #16, #17}, {ports #10, #11, #22, #23}.

(DMRS Port Combination)

It is studied that, in antenna port indication for DMRS ports of enhanced type 1/enhanced type 2 for PDSCH with a maximum DMRS length = 1/2, all of port combinations of some categories below can be indicated.

(Category 1) A combination of a plurality of indices of existing ports (p = 0 to 7 for enhanced type 1, p = 0 to 11 for enhanced type 2).

(Category 2) A combination of a plurality of indices of new ports (p = 8 to 15 for enhanced type 1, p = 12 to 23 for enhanced type 2).

(Category 3) A combination of existing port indices and new port indices in one CDM group with at least a maximum DMRS length = 1 (a combination of at least one of up to 4 ports from p = {0, 1, 8, 9} and up to 4 ports from p = {2, 3, 10, 11} for enhanced type 1, a combination of at least one of up to 4 ports from p = {0, 1, 12, 13} and up to 4 ports from p = {2, 3, 14, 15} for enhanced type 2). Only one CDM group is used for rank 4 or less. More than one CDM group can be used for a rank greater than 4.

A DMRS port for PDSCH is determined by p + 1000.

It is studied that, for DMRS ports of enhanced type 1/enhanced type 2 for PDSCH/PUSCH, a maximum DMRS length = 1 and a rank = 5, 6, 7, 8 are supported.

(DMRS Sequence Generation Procedure)

Sequence r(n) of a DMRS for PUSCH in CP-OFDM (in a case of transform precoding disabled) is generated in accordance with the following DMRS sequence generation procedure.

$$r(n) = \frac{1}{\sqrt{2}}\left(1 - 2 \cdot c(2n)\right) + j\frac{1}{\sqrt{2}}\left(1 - 2 \cdot c(2n+1)\right) \qquad (E1)$$

A pseudo-random (pseudo-noise, PN) sequence generator for pseudo-random sequence c(i) is initialized with $c_{init}$ in the equation below.

$$c_{\text{init}} =$$

$$\left(2^{17}\left(N_{\text{symb}}^{\text{slot}} n_{s,f}^{\mu} + l + 1\right)\left(2N_{\text{ID}}^{\bar{n}_{\text{SCID}}^{\bar{\lambda}}} + 1\right) + 2^{17}\left\lfloor\frac{\bar{\lambda}}{2}\right\rfloor + 2N_{\text{ID}}^{\bar{n}_{\text{SCID}}^{\bar{\lambda}}} + \bar{n}_{\text{SCID}}^{\bar{\lambda}}\right) \bmod 2^{31}$$

$$(E2)$$

l is an OFDM symbol number within a slot. $n_{s,f}^{\mu}$ is a slot number within a frame. $N_{\text{ID}}^0$ and $N_{\text{ID}}^1$ comply with the following.

- In a case where higher-layer parameters scramblingID0 and scramblingID1 are provided in a DMRS-UplinkConfig information element and a PUSCH is scheduled by DCI format 0_1 or 0_2, or by a PUSCH transmission with a configured grant, $N_{\text{ID}}^0$, $N_{\text{ID}}^1 \in \{0, 1, ..., 65535\}$ are given by scramblingID0 and scramblingID1, respectively.
- In a case where the higher-layer parameter scramblingID0 is provided in the DMRS-UplinkConfig information element and a PUSCH is scheduled by DCI format 0_0 with a CRC scrambled by a C-RNTI, MCS-C-RNTI, or CS-RNTI, $N_{\text{ID}}^0 \in \{0, 1, ..., 65535\}$ is given by scramblingID0.
- In a case where higher-layer parameters msgA-scramblingID0 and msgA-scramblingID1 are provided in the DMRS-UplinkConfig information element and a PUSCH transmission is triggered by a Type-2 random access procedure, $N_{\text{ID}}^0$, $N_{\text{ID}}^1 \in \{0, 1, ..., 65535\}$ are given by msgA-scramblingID0 and msgA-scramblingID1, respectively.
- Otherwise, $n_{\text{ID}}^{n^{\wedge}\text{-SCID}^{\wedge}\lambda^{\wedge}\text{-}} = n_{\text{ID}}^{\text{cell}}$.
- $n^{\wedge}\text{\_SCID}^{\wedge}\lambda^{\wedge}\text{-} (= n_{\text{SCID}}^{\lambda^{\wedge}\text{-}})$ and $\lambda^{\wedge}\text{-} (= \lambda\text{-})$ are given by the following.

    -- If dmrs-Uplink is provided in the DMRS-UplinkConfig information element, $n_{\text{SCID}}^{\lambda^{\wedge}\text{-}} = n_{\text{SCID}}$ with respect to $\lambda = 0$ or $\lambda = 2$, $n_{\text{SCID}}^{\lambda^{\wedge}\text{-}} = 1 - n_{\text{SCID}}$ with respect to $\lambda = 1$, and $\lambda\text{-} = \lambda$. Here, $\lambda$ is a CDM group.
    -- Otherwise, $n_{\text{SCID}}^{\lambda^{\wedge}\text{-}} = n_{\text{SCID}}$ and $\lambda\text{-} = 0$.

A UE capability lowPAPR-DMRS-PUSCHwithoutPrecoding-r16 indicates that the UE supports a low-PAPR DMRS for PUSCH not using transform precoding. In a case where dmrs-Uplink (dmrs-Uplink-r16) is provided in the DMRS-UplinkConfig information element, the field indicates that a low-PAPR DMRS is used.

In a DMRS sequence generation procedure for a DMRS for PUSCH in CP-OFDM, a DMRS sequence generation procedure for a DMRS for PDSCH mainly complies with the following interpretation.

- "PUSCH" is interpreted as "PDSCH"
- "DCI format 0_1 or 0_2" is interpreted as "DCI format 1_1 or 1_2"
- "DMRS-UplinkConfig" is interpreted as "DMRS-DownlinkConfig"
- "dmrs-Uplink (dmrs-Uplink-r16)" is interpreted as "dmrs-Downlink (dmrs-Downlink-r16)"

A UE capability lowPAPR-DMRS-PDSCH-r16 indicates that the UE supports a low-PAPR DMRS for PDSCH. In a case where dmrs-Downlink (dmrs-Downlink-r16) is provided in the DMRS-DownlinkConfig information element, the field indicates that a low-PAPR DMRS is used.

In a case where a UE does not support a Rel-16 DMRS sequence generation function (low-PAPR DMRS sequence generation function) (does not report the UE capability of the low-PAPR DMRS sequence generation function) or is not configured with the low-PAPR DMRS sequence generation function, the UE uses a Rel-15 DMRS sequence generation function (normal DMRS sequence generation function) without using the low-PAPR DMRS sequence generation function. With the normal DMRS sequence generation function, $c_{\text{init}}$ is the same irrespective of CDM groups and the DMRS sequence is the same irrespective of CDM groups. In Rel. 15, in a case where the number of MIMO layers is greater than 2 and more than one CDM groups are scheduled, more than one DMRS sequences corresponding to the respective CDM groups are FDMed. In this case, for the normal DMRS sequence generation function in Rel. 15, a scramble ID common to the all DMRS ports is used, and thus the same pseudo-random sequence is used for the more than one CDM groups. In this case, the same DMRS sequence is FDMed and thus peak-to-average power ratio (PAPR) is increased.

In a case where a UE supports the low-PAPR DMRS sequence generation function (reports the UE capability of the low-PAPR DMRS sequence generation function) and is configured with a low-PAPR DMRS, the UE uses the low-PAPR DMRS sequence generation function. With the low-PAPR DMRS sequence generation function, $c_{\text{init}}$ is different depending on CDM groups and the DMRS sequence is different depending on CDM groups. This allows the PAPR in every DMRS port combination to be reduced to the same level as a data symbol.

In the present disclosure, a low-PAPR DMRS, a low-PAPR DMRS function, a low-PAPR DMRS sequence, a low-PAPR DMRS sequence generation function, a Rel-16 DMRS sequence generation function, dmrs-Downlink-r16/dmrs-Uplink-r16, and generation of a DMRS sequence depending on CDM groups may be interchangeably interpreted.

In the present disclosure, a DMRS not using a low-PAPR DMRS sequence generation function, a normal DMRS, a normal DMRS sequence, a DMRS sequence generation function not using a low-PAPR DMRS sequence generation function, a normal DMRS sequence generation function, a Rel-15 DMRS sequence generation function, a case of not being configured with dmrs-Downlink-r16/dmrs-Uplink-r16, and generation of a DMRS sequence not depending on CDM groups may be interchangeably interpreted.

In the present disclosure, a DMRS sequence generation function may be at least one of a normal DMRS sequence generation function and a low-PAPR DMRS sequence generation function.

(Enhanced DMRS Type)

An RRC parameter for configuration of a Rel-18 DMRS (enhanced type 1/2) is under study.

A PDSCH configuration (PDSCH-Config) may include a downlink (DL) DMRS configuration (DMRS-DownlinkConfig) for configuration of a DMRS for PDSCH. DMRS-DownlinkConfig may include dmrs-Type, dmrs-AdditionalPosition, maxLength, scramblingID0, scramblingID1, phaseTrackingRS, and dmrs-Downlink-r16 and may further include enhanced-dmrs-Type_r18. dmrs-Downlink-r16 indicates whether a low-PAPR DMRS is used. In a case where dmrs-Downlink-r16 set to 'enabled' is present, the low-PAPR DMRS is used.

enhanced-dmrs-Type_r18 corresponds to selection of an enhanced DMRS type to be used for DL. In a case where there is no field for enhanced-dmrs-Type_r18, a UE uses, depending on dmrs-Type, DMRS type 1 or DMRS type 2. In a case where there is a field for enhanced-dmrs-Type_r18, when no dmrs-Type is present, a UE uses DMRS enhanced type 1, or when dmrs-Type is present, the UE uses DMRS enhanced type 2.

A PUSCH configuration (PUSCH-Config) may include an uplink (UL) DMRS configuration (DMRS-UplinkConfig) for configuration of a DMRS for PUSCH. DMRS-UplinkConfig may include dmrs-Type, dmrs-AdditionalPosition, maxLength, transformPrecodingDisabled, and transformPrecodingEnabled. transformPrecodingDisabled may include scramblingID0, scramblingID1, and dmrs-Uplink-r16 and may further include enhanced-dmrs-Type_r18. dmrs-Uplink-r16 indicates whether a low-PAPR DMRS is used. In a case where dmrs-Uplink-r16 set to 'enabled' is present, the low-PAPR DMRS is used.

enhanced-dmrs-Type_r18 corresponds to selection of an enhanced DMRS type to be used for UL. In a case where there is no field for enhanced-dmrs-Type_r18, a UE uses, depending on dmrs-Type, DMRS type 1 or DMRS type 2. In a case where there is a field for enhanced-dmrs-Type_r18, when no dmrs-Type is present, a UE uses DMRS enhanced type 1, or when dmrs-Type is present, the UE uses DMRS enhanced type 2.

(Analysis)

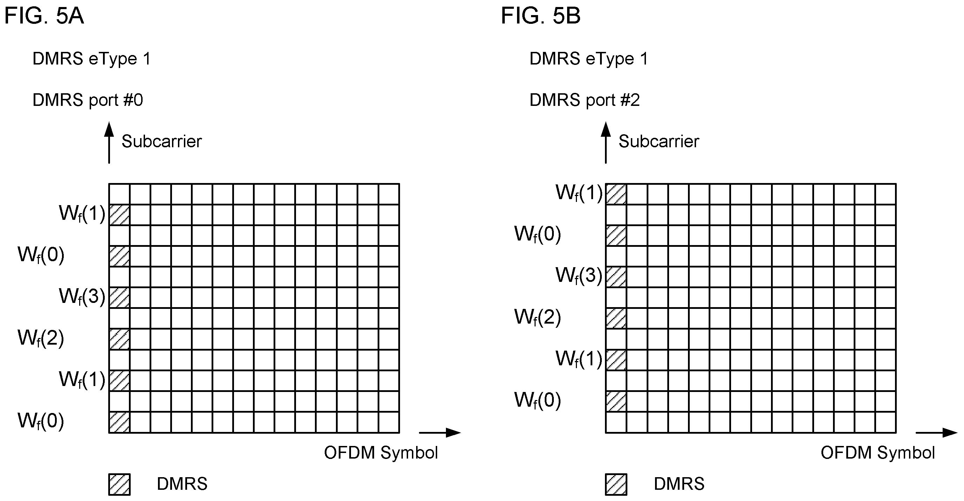

FIG. 5A shows an example of mapping, with respect to DMRS port #0 in DMRS enhanced type 1, of DMRSs and FD-OCCs ($W_f(0)$, $W_f(1)$, $W_f(2)$, $W_f(3)$). FIG. 5B shows an example of mapping, with respect to DMRS port #2 in DMRS enhanced type 1, of DMRSs and FD-OCCs ($W_f(0)$, $W_f(1)$, $W_f(2)$, $W_f(3)$). DMRS ports #0 and #2 respectively correspond to CDM groups #0 and #1. DMRS ports #0 and #2 are mapped to REs different from each other and FDMed.

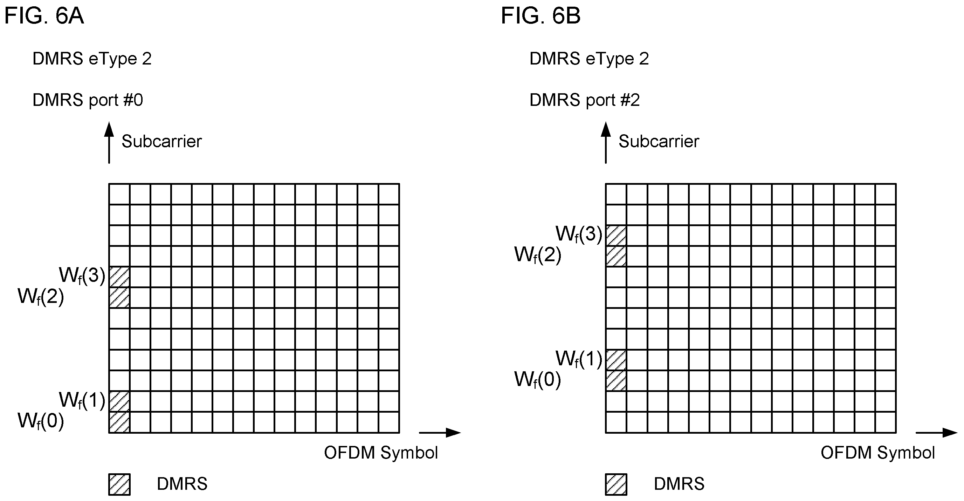

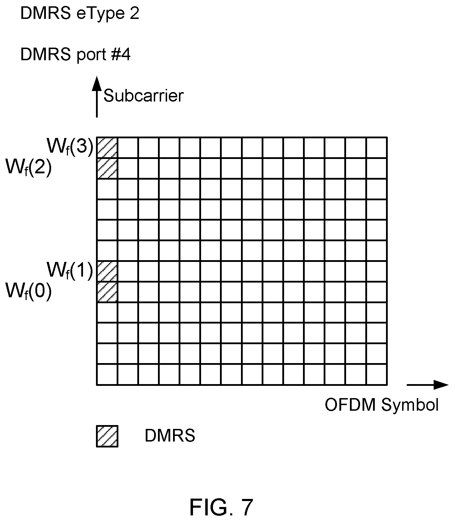

FIG. 6A shows an example of mapping, with respect to DMRS port #0 in DMRS enhanced type 2, of DMRSs and FD-OCCs ($W_f(0)$, $W_f(1)$, $W_f(2)$, $W_f(3)$). FIG. 6B shows an example of mapping, with respect to DMRS port #2 in DMRS enhanced type 2, of DMRSs and FD-OCCs ($W_f(0)$, $W_f(1)$, $W_f(2)$, $W_f(3)$). FIG. 7 shows an example of mapping, with respect to DMRS port #4 in DMRS enhanced type 2, of DMRSs and FD-OCCs ($W_f(0)$, $W_f(1)$, $W_f(2)$, $W_f(3)$). DMRS ports #0, #2, and #4 respectively correspond to different CDM groups #0, #1, and #2. DMRS ports #0, #2, and #4 are mapped to REs different from each other and FDMed.

As described above, in a case where the normal DMRS sequence generation function is applied and one UE uses a plurality of CDM groups, the same DMRS sequence is FDMed and thus the PAPR of a DMRS sequence for CP-OFDM (PUSCH/PDSCH) is increased. Even if the normal DMRS sequence generation function is applied, in a case where one UE uses one CDM group, a DMRS corresponding to the CDM group is not FDMed to a DMRS sequence and thus the PAPR is not increased.

For Rel-18 DMRS (enhanced type 1/2), a DMRS port combination including a plurality of DMRS ports provided over a plurality of CDM groups is under study. Studies have not sufficiently been made on a method of DMRS sequence generation/arrangement with respect to such a DMRS port combination. If such a method is not sufficiently studied, increase in PAPR and reduction in communication quality/throughput may be caused.

In view of this, the inventors of the present invention came up with the idea of a method of DMRS sequence generation/arrangement.

Embodiments according to the present disclosure will be described in detail with reference to the drawings as follows. Note that the embodiments (for example, respective cases) to be described below may each be used individually, or at least two of the embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC signaling, an RRC IE, an RRC parameter, and a higher layer parameter may be interchangeably interpreted.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "having capability of ..." may be interchangeably interpreted as "supporting/reporting capability of ...."

In the present disclosure, $a_b$, a_b, and an expression of a with b added to the lower right of a may be interchangeably interpreted. In the present disclosure, $a^c$, a^c, and an expression of a with c added to the upper right of a may be interchangeably interpreted. In the present disclosure, $a_b{}^c$, a_b^c, and an expression of a with b added to the lower right of a and c added to the upper right of a may be interchangeably interpreted. In the present disclosure, ceil(x) and ceiling function may be interchangeably interpreted. In the present disclosure, floor(x) and floor function may be interchangeably interpreted. In the present disclosure, sqrt(x) and square root (root) may be interchangeably interpreted. In the present disclosure, x~ may be expressed as x with "~" added above x or may be referred to as x tilde. In the present disclosure, x⁻ may be expressed as x with "-" added above x or may be referred to as x bar. In the present disclosure, x mod y, mod(x, y), mod function, and modulo operation may be interchangeably interpreted.

In the present disclosure, a port, an antenna port, a DM-RS port, a PDSCH port, and a PUSCH port may be interchangeably interpreted.

(Radio Communication Method)

<Embodiment 0>

In a case where an enhanced DMRS type function (enhanced-dmrs-Type_r18) is configured for a PDSCH/PUSCH, DMRS generation may follow at least one of some options below.

- Option 1: the low-PAPR DMRS sequence generation function (dmrs-Downlink-r16/dmrs-Uplink-r16) is not configured. It may be defined in a specification that, in the case where the enhanced DMRS type function is configured, a UE does not assume that the low-PAPR DMRS sequence generation function is configured.
- Option 2: the low-PAPR DMRS sequence generation function (dmrs-Downlink-r16/dmrs-Uplink-r16) is surely configured. It may be defined in a specification that, in the case where the enhanced DMRS type function is configured, a UE assumes that the low-PAPR DMRS sequence generation function is configured. The low-PAPR DMRS sequence generation function may be a premise function (prerequisite feature) for the enhanced DMRS type function.
- Option 3: the low-PAPR DMRS sequence generation function (dmrs-Downlink-r16/dmrs-Uplink-r16) may or may not be configured. Option 3 may follow at least one of some options 3-x below.

    -- Option 3-1: The UE may report a combination of a UE capability indicating supporting of the low-PAPR DMRS sequence generation function and a UE capability indicating supporting of the enhanced DMRS type function. It may be defined in a specification that the UE not supporting/reporting the low-PAPR DMRS sequence generation function is required to support the normal DMRS sequence generation function (Rel-15 DMRS sequence generation function).
    -- Option 3-2: A new UE capability may indicate that at least one of the normal DMRS sequence generation function and the low-PAPR DMRS sequence generation function is applicable together with the enhanced DMRS type function. For the UE, one of the normal DMRS sequence generation function and the low-PAPR DMRS sequence generation function may be applicable together with the enhanced DMRS type function, and the UE may report whether the other one is applicable together with the enhanced DMRS type function. The PAPR of low-PAPR DMRS is lower than the PAPR of normal DMRS, allowing UE RF performance or cost to be reduced. A basic UE function may be the low-PAPR DMRS sequence generation function and an optional/advanced UE function may be the normal DMRS sequence generation function.

For a PDSCH and PUSCH, different options (different DMRS sequence generation functions) may be applied. For example, option 2 may be applied to the PUSCH and option 1 or 3 may be applied to the PDSCH. For example, the low-PAPR DMRS sequence generation function may be applied to the PUSCH and the normal DMRS sequence generation function may be applied to the PDSCH.

This embodiment enables a UE to appropriately support/determine/apply a DMRS sequence generation function with an enhanced DMRS type function.

<Embodiment 1>

With use of the normal DMRS sequence generation function with respect to a specific DMRS port combination in the enhanced DMRS type function (a specific row in an antenna port table, a specific value of an antenna port field), the same DMRS sequence is FDMed, causing the PAPR to be increased. The specific DMRS port combination may be a DMRS port combination that uses a plurality of CDM groups (is provided over the plurality of CDM groups). A relation between DMRSs and CDM groups may follow the above-described association between CDM groups, DMRS ports, and OCCs (FIGS. 4A and 4B).

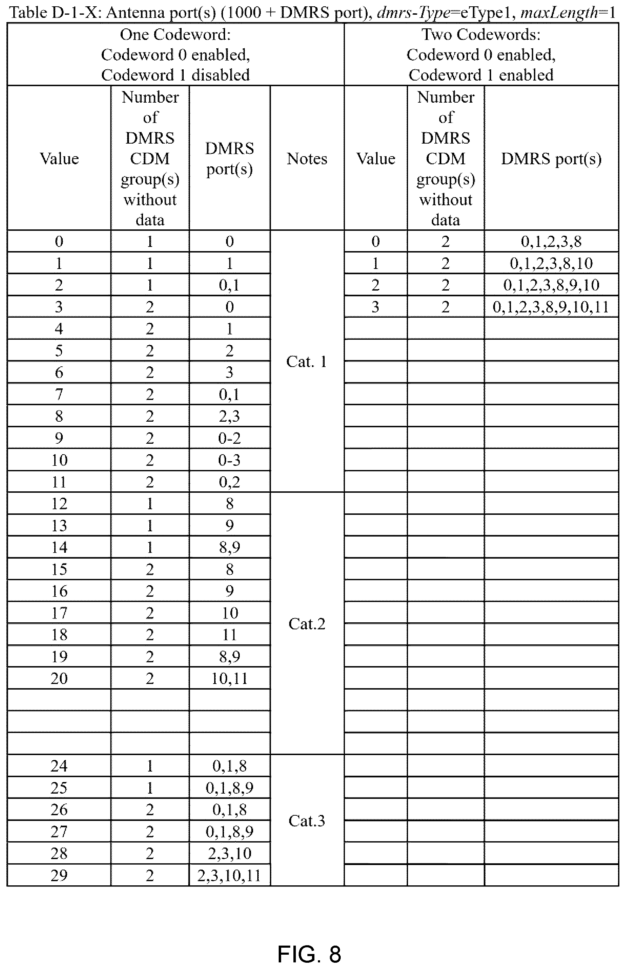

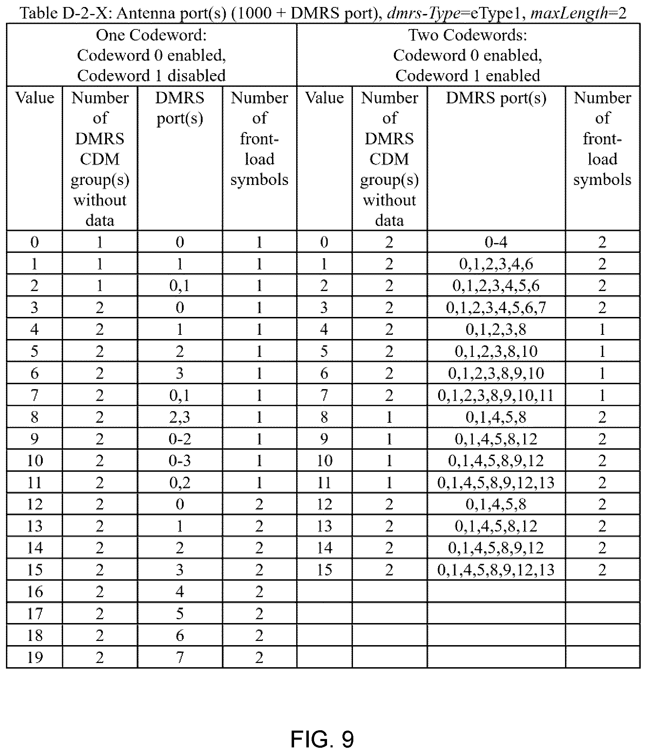

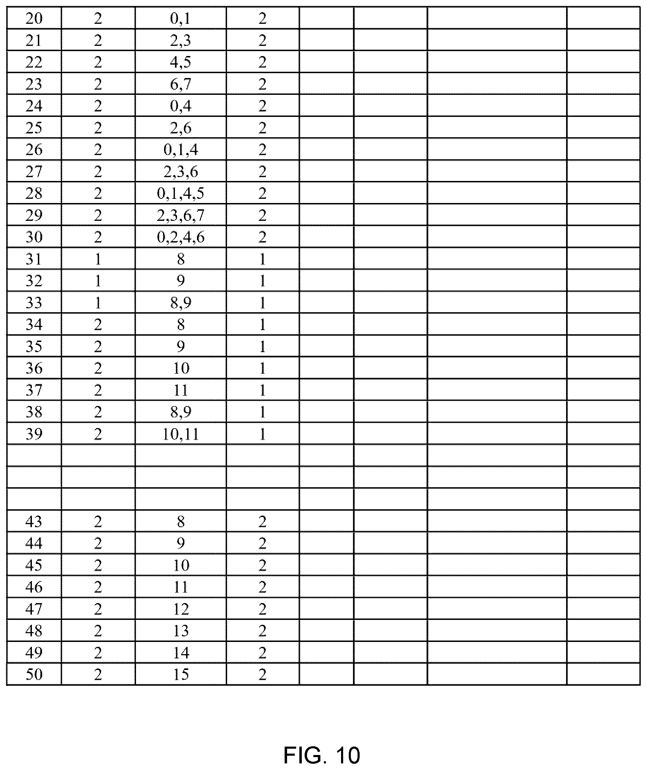

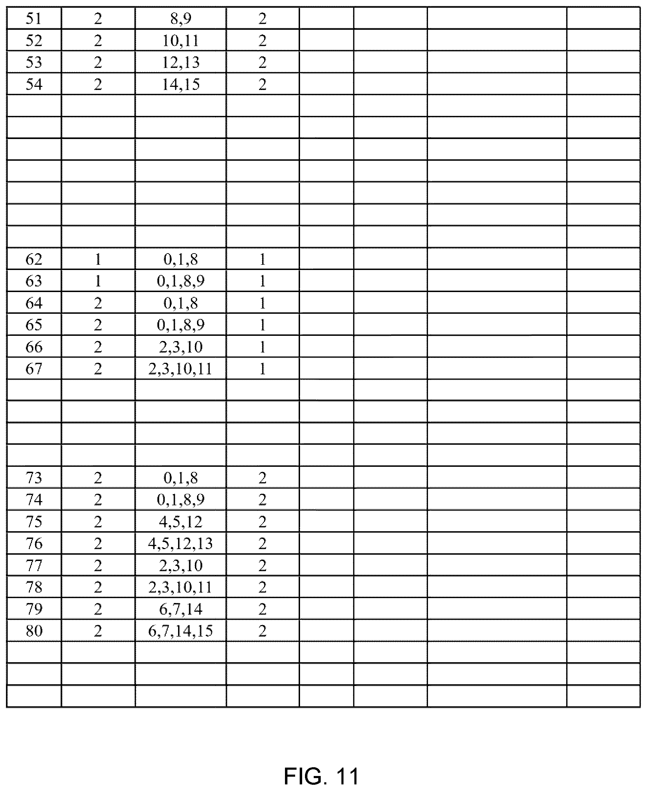

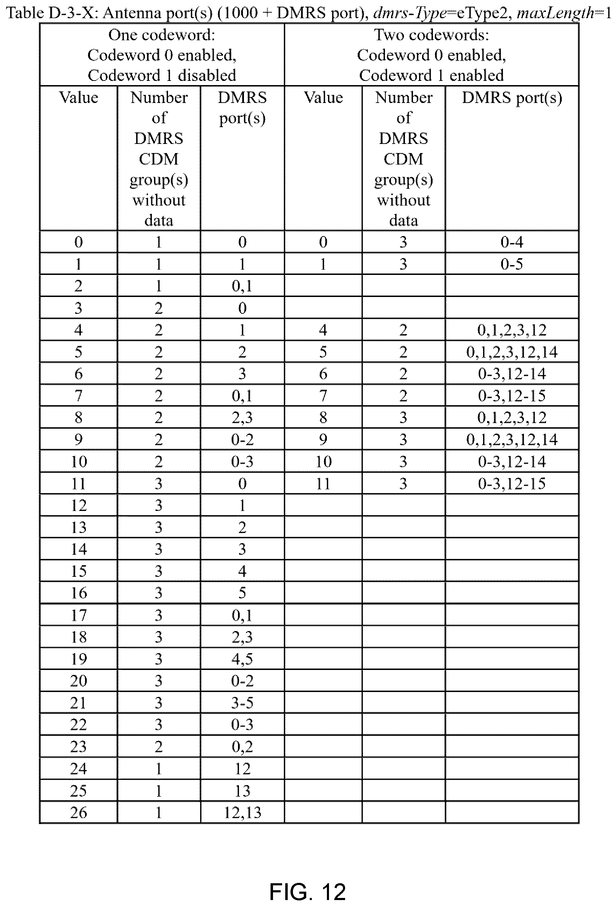

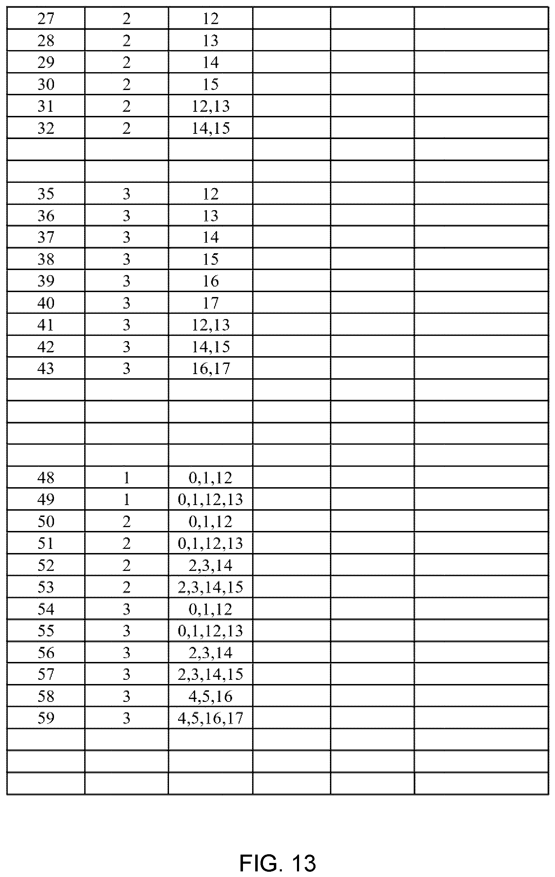

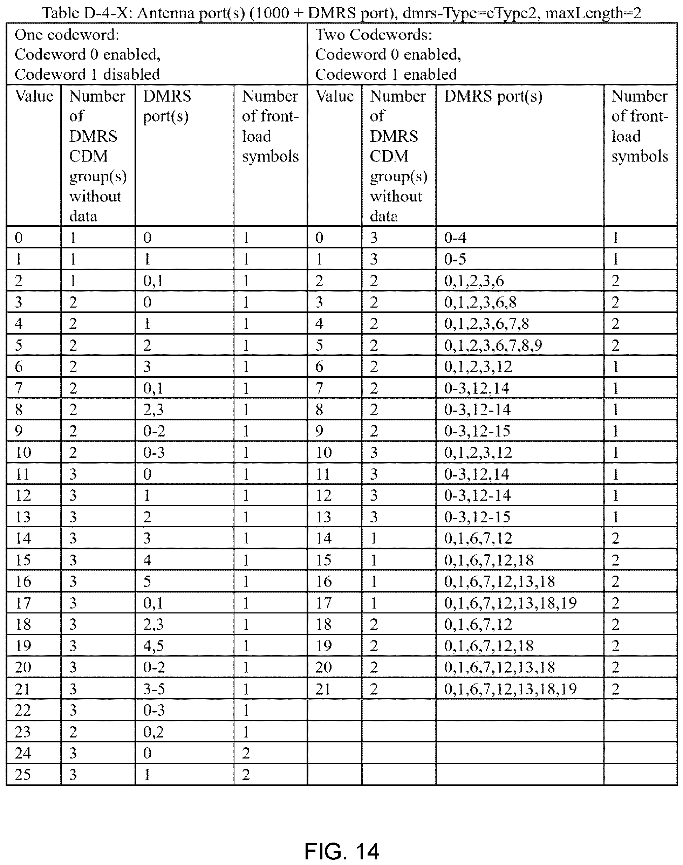

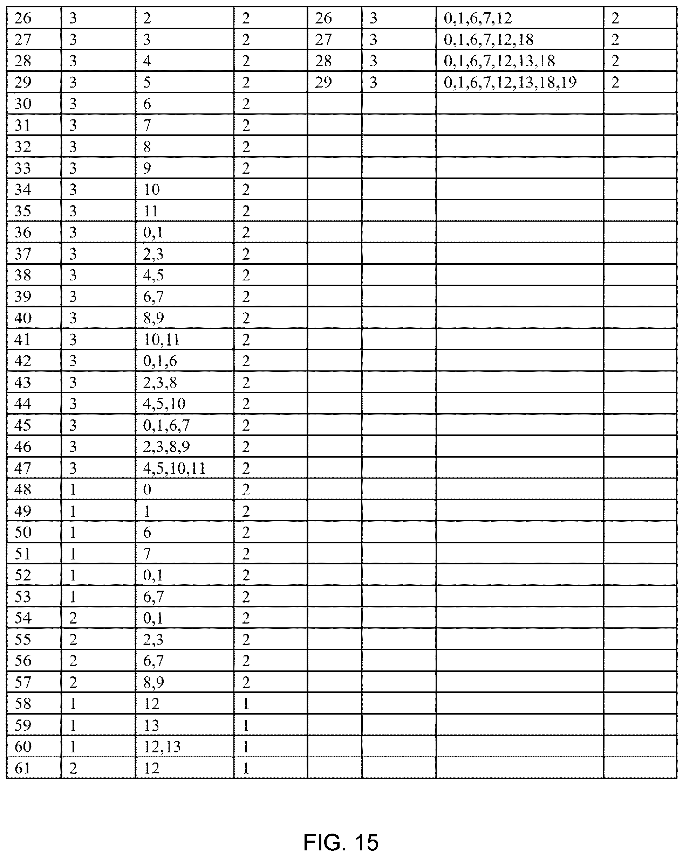

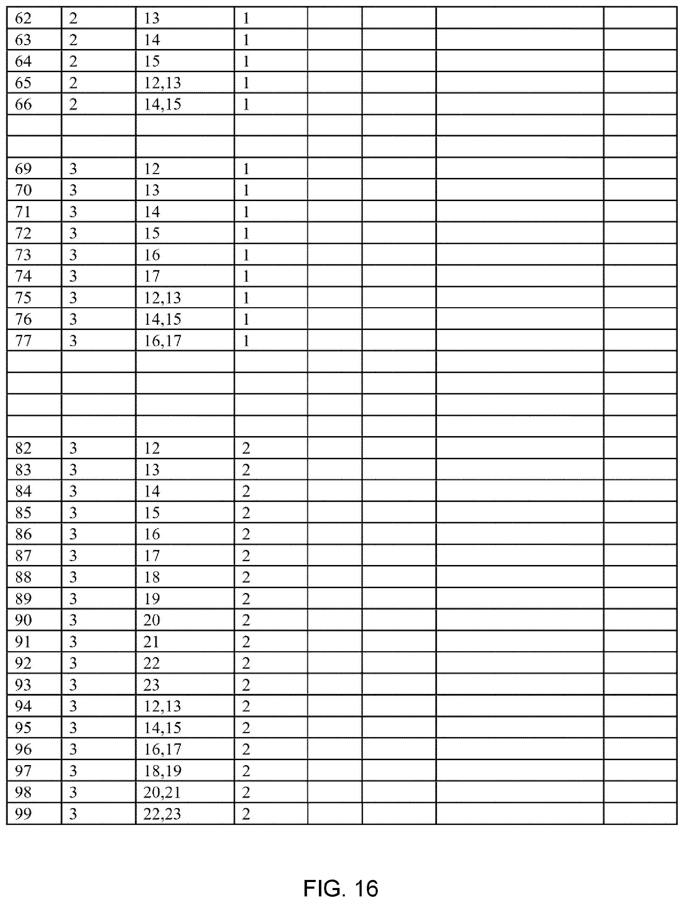

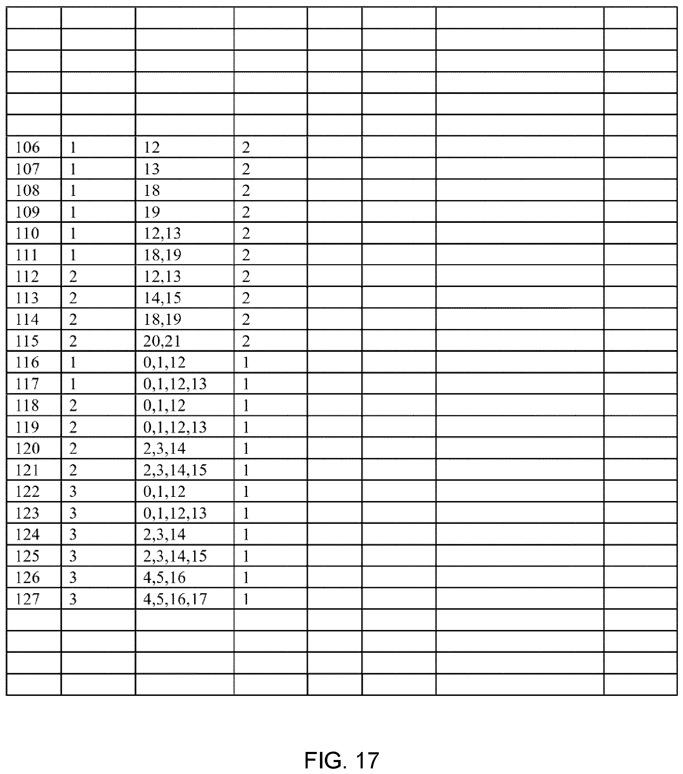

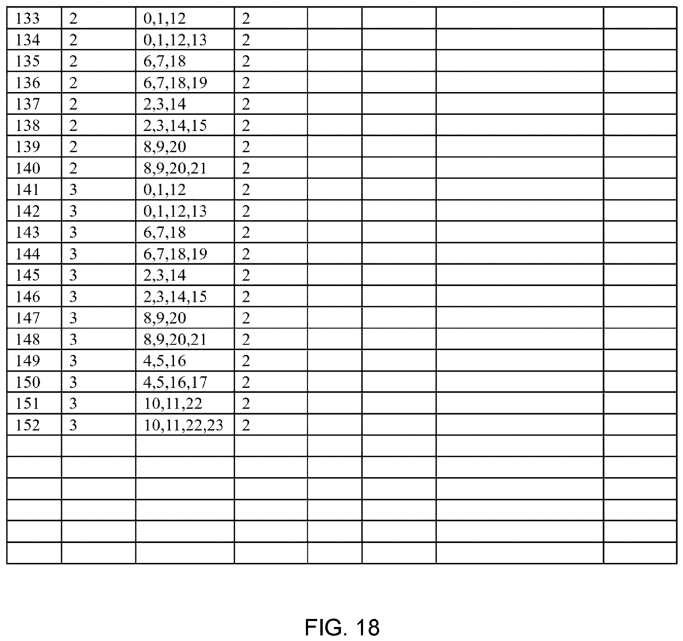

FIG. 8 shows an example of an antenna port table for PDSCH in a case of DMRS type = enhanced type 1 and maximum length = 1. FIGS. 9, 10, and 11 show an example of an antenna port table for PDSCH in a case of DMRS type = enhanced type 1 and maximum length = 2. FIGS. 12 and 13 show an example of an antenna port table for PDSCH in a case of DMRS type = enhanced type 2 and maximum length = 1. FIGS. 14, 15, 16, 17, and 18 show an example of a PDSCH antenna port table in a case of DMRS type = enhanced type 2 and maximum length = 2. Each row in the antenna port tables for PDSCH corresponds to an antenna port field value. Each row further includes the number of DMRS CDM groups without data and a DMRS port combination (one or more DMRS ports).

In an example of an antenna port table for PDSCH in a case of DMRS type = enhanced type 1, maximum length = 1, and rank = 2, with respect to one CW and value = 9, the number of DMRS CDM groups without data = 2 and DMRS port combination = 1000, 1001, and 1002 is a specific DMRS port combination using CDM groups #0, #0, and #1, respectively. Similarly, with respect to two CWs and value = 0, the number of DMRS CDM groups without data = 2 and DMRS port combination = 1000, 1001, 1002, 1003, and 1004 is a specific DMRS port combination using CDM groups #0, #0, #1, #1, and #0, respectively.

In an example of an antenna port table for PDSCH in a case of DMRS type = enhanced type 1, maximum length = 1, and rank = 3, with respect to one CW and value = 9, the number of DMRS CDM groups without data = 2 and DMRS port combination = 1000, 1001, and 1002 is a specific DMRS port combination using CDM groups #0, #0, and #1, respectively. Similarly, with respect to two CWs and value = 0, the number of DMRS CDM groups without data = 3 and DMRS port combination = 1000, 1001, 1002, 1003, and 1004 is a specific DMRS port combination using CDM groups #0, #0, #1, #1, and #2, respectively.

In an example of an antenna port table for PDSCH in a case of DMRS type = enhanced type 1, maximum length = 1, and rank = 4, with respect to one CW and value = 9, the number of DMRS CDM groups without data = 2 and DMRS port combination = 1000, 1001, and 1002 is a specific DMRS port combination using CDM groups #0, #0, and #1, respectively. Similarly, with respect to two CWs and value = 0, the number of DMRS CDM groups without data = 2 and DMRS port combination = 1000, 1001, 1002, 1003, and 1004 is a specific DMRS port combination using CDM groups #0, #0, #1, #1, and #2, respectively.

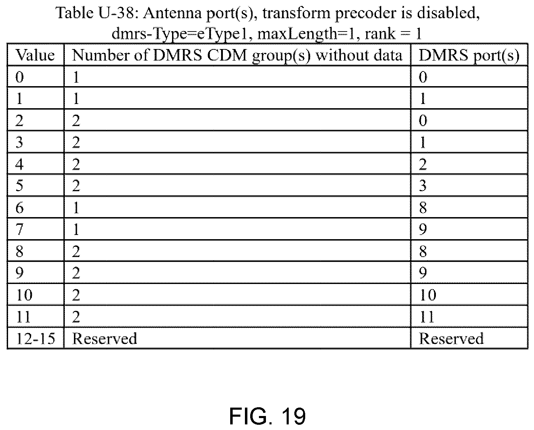

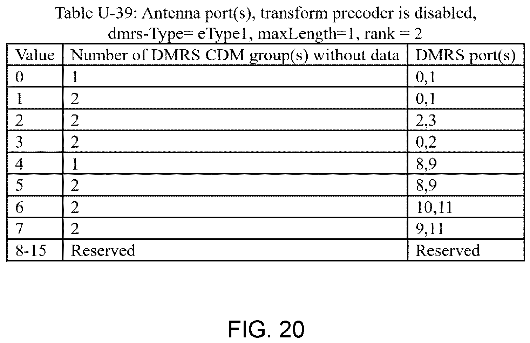

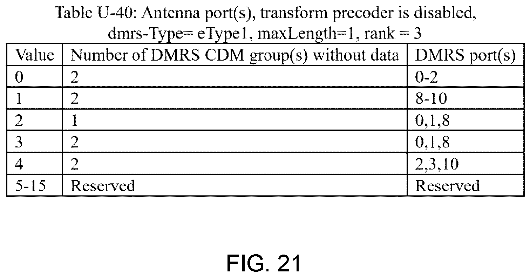

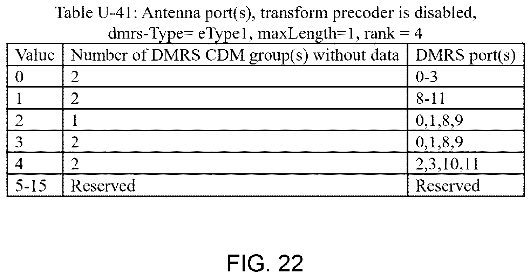

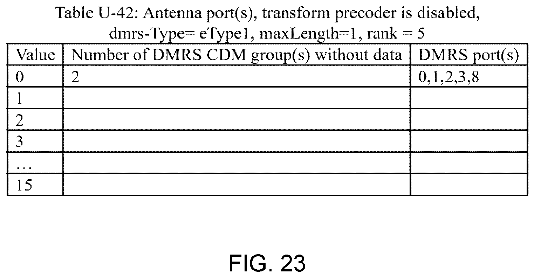

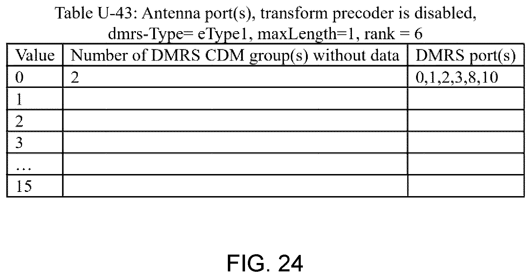

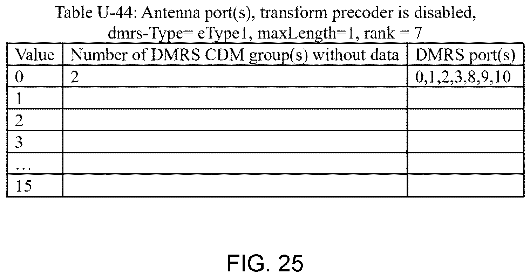

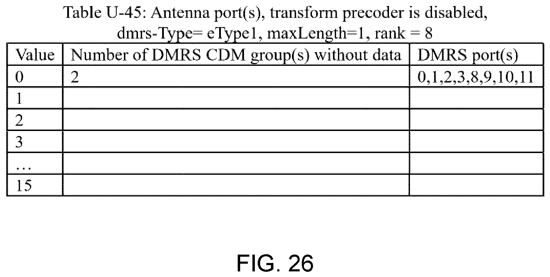

FIG. 19 shows an example of an antenna port table for PUSCH in a case of transform precoding disabled, DMRS type = enhanced type 1, maximum length = 1, and rank = 1. FIG. 20 shows an example of an antenna port table for PUSCH in a case of transform precoding disabled, DMRS type = enhanced type 1, maximum length = 1, and rank = 2. FIG. 21 shows an example of an antenna port table for PUSCH in a case of transform precoding disabled, DMRS type = enhanced type 1, maximum length = 1, and rank = 3. FIG. 22 shows an example of an antenna port table for PUSCH in a case of transform precoding disabled, DMRS type = enhanced type 1, maximum length = 1, and rank = 4. FIG. 23 shows an example of an antenna port table for PUSCH in a case of transform precoding disabled, DMRS type = enhanced type 1, maximum length = 1, and rank = 5. FIG. 24 shows an example of an antenna port table for PUSCH in a case of transform precoding disabled, DMRS type = enhanced type 1, maximum length = 1, and rank = 6. FIG. 25 shows an example of an antenna port table for PUSCH in a case of transform precoding disabled, DMRS type = enhanced type 1, maximum length = 1, and rank = 7. FIG. 26 shows an example of an antenna port table for PUSCH in a case of transform precoding disabled, DMRS type = enhanced type 1, maximum length = 1, and rank = 8. Each row in the antenna port tables corresponds to an antenna port field value. Each row further includes the number of DMRS CDM groups without data and a DMRS port combination (one or more DMRS ports).

In an example of an antenna port table for PUSCH in a case of transform precoding disabled, DMRS type = enhanced type 1, maximum length = 1, and rank = 2, with respect to value = 0, the number of DMRS CDM groups without data = 1 and DMRS port combination = 0 and 1 uses CDM group #0 (not the specific DMRS port combination). Different FD-OCCs are applied to DMRS ports #0 and #1. DMRSs of DMRS ports #0 and #1 are mapped to REs shown in FIG. 5A described above. To the rest of the REs in the same symbol (REs shown in FIG. 5B described above), data is mapped. Therefore, even if the normal DMRS sequence generation function is applied, the same DMRS sequence is not FDMed, preventing the PAPR from being increased.

In an example of an antenna port table for PUSCH in a case of transform precoding disabled, DMRS type = enhanced type 1, maximum length = 1, and rank = 2, with respect to value = 1, the number of DMRS CDM groups without data = 2 and DMRS port combination = 0 and 1 uses CDM group #0 (not the specific DMRS port combination). Different FD-OCCs are applied to DMRS ports #0 and #1. DMRSs of DMRS ports #0 and #1 are mapped to REs shown in FIG. 5A described above. To the rest of the REs in the same symbol (REs shown in FIG. 5B described above), no data is mapped. Therefore, even if the normal DMRS sequence generation function is applied, the same DMRS sequence is not FDMed, preventing the PAPR from being increased.

In an example of an antenna port table for PUSCH in a case of transform precoding disabled, DMRS type = enhanced type 1, maximum length = 1, and rank = 2, with respect to value = 1, the number of DMRS CDM groups without data = 2 and DMRS port combination = 0 and 2 is a specific DMRS port combination using CDM groups #0 and #1, respectively. A DMRS of DMRS port #0 is mapped to an RE shown in FIG. 5A described above and a DMRS of DMRS port #2 is mapped to an RE shown in FIG. 5B described above. Therefore, if the normal DMRS sequence generation function is applied, the same DMRS sequence is FDMed, causing the PAPR to be increased. If the low-PAPR DMRS sequence generation function is applied, the same DMRS sequence is not FDMed, preventing the PAPR from being increased.

Similarly, with respect to value = 7, the number of DMRS CDM groups without data = 2 and DMRS port combination = 9 and 11 is a specific DMRS port combination using CDM groups #0 and #1, respectively.

In an example of an antenna port table for PUSCH in a case of transform precoding disabled, DMRS type = enhanced type 1, maximum length = 1, and rank = 3, with respect to value = 0, the number of DMRS CDM groups without data = 2 and DMRS port combination = 0, 1, and 2 is a specific DMRS port combination using CDM groups #0, #0, and #1, respectively. Similarly, with respect to value = 1, the number of DMRS CDM groups without data = 2 and DMRS port combination = 8, 9, and 10 is a specific DMRS port combination using CDM groups #0, #0, and #1, respectively.

In an example of an antenna port table for PUSCH in a case of transform precoding disabled, DMRS type = enhanced type 1, maximum length = 1, and rank = 4, with respect to value = 0, the number of DMRS CDM groups without data = 2 and DMRS port combination = 0, 1, 2, and 3 is a specific DMRS port combination using CDM groups #0, #0, #1, and #1, respectively. Similarly, with respect to value = 1, the number of DMRS CDM groups without data = 2 and DMRS port combination = 8, 9, 10, and 11 is a specific DMRS port combination using CDM groups #0, #0, #1, and #1, respectively.

In the following antenna port table, a row enclosed in a bracket ("[]") may or may not be defined in a specification.

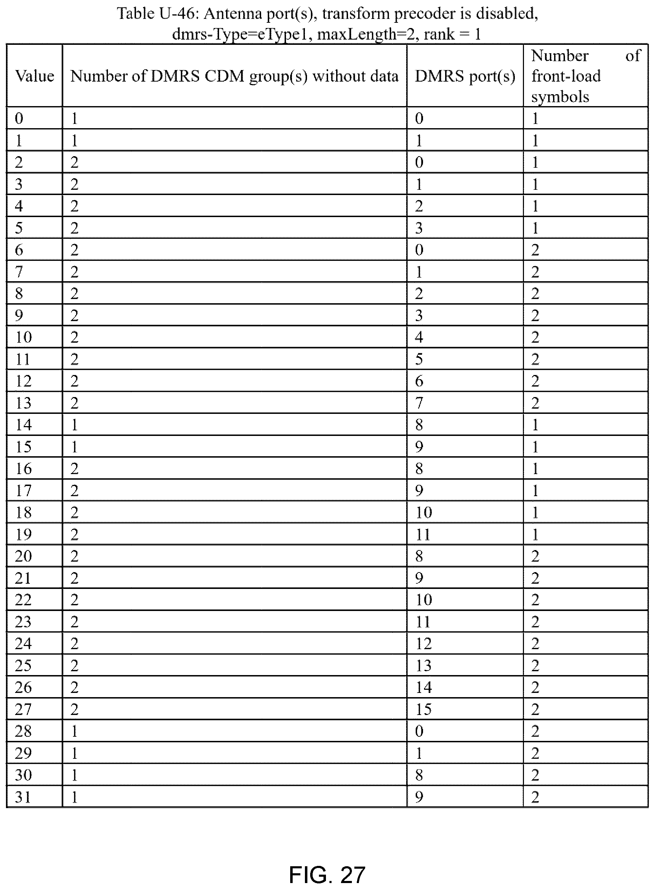

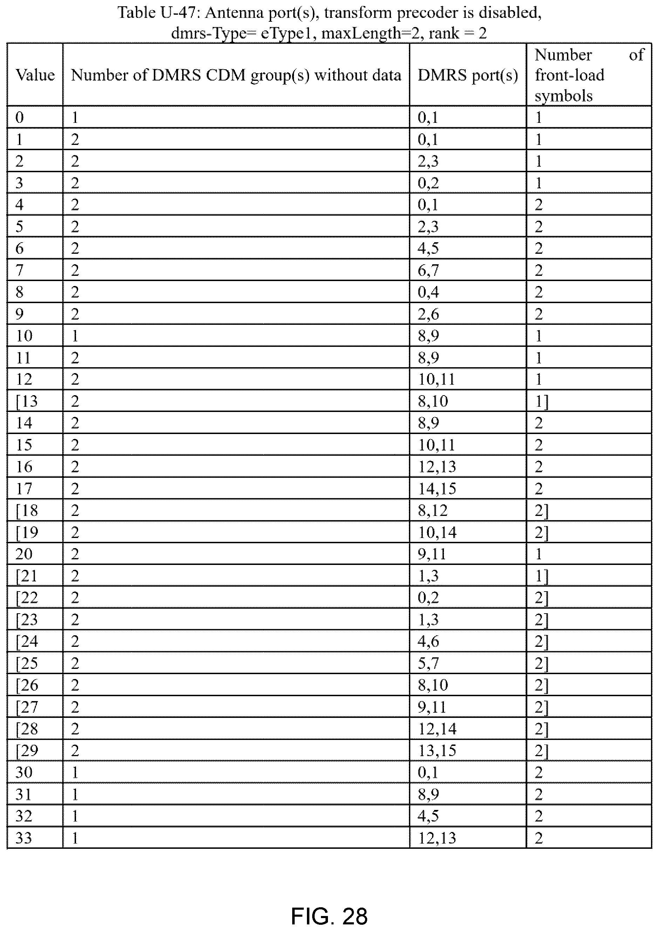

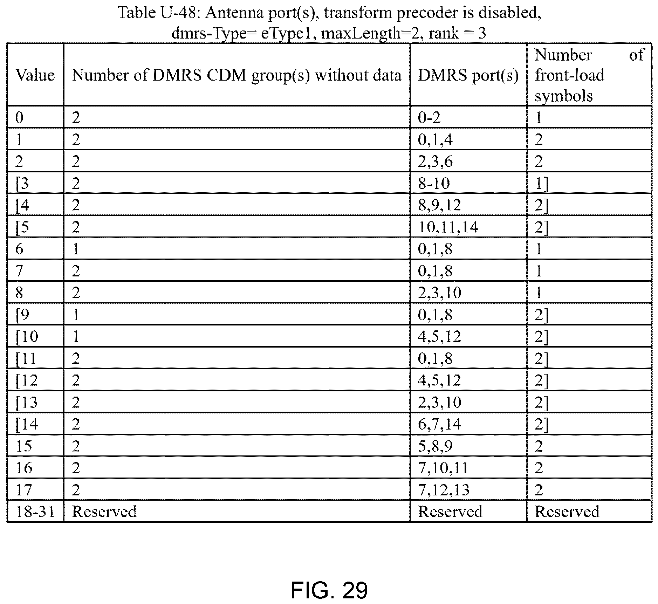

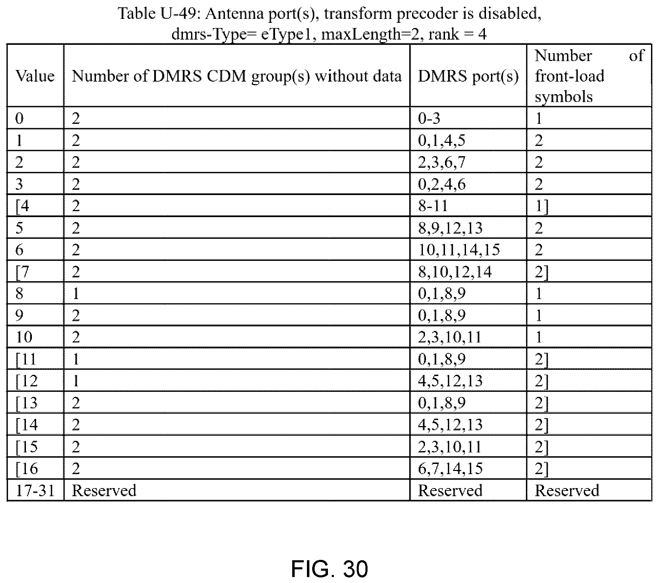

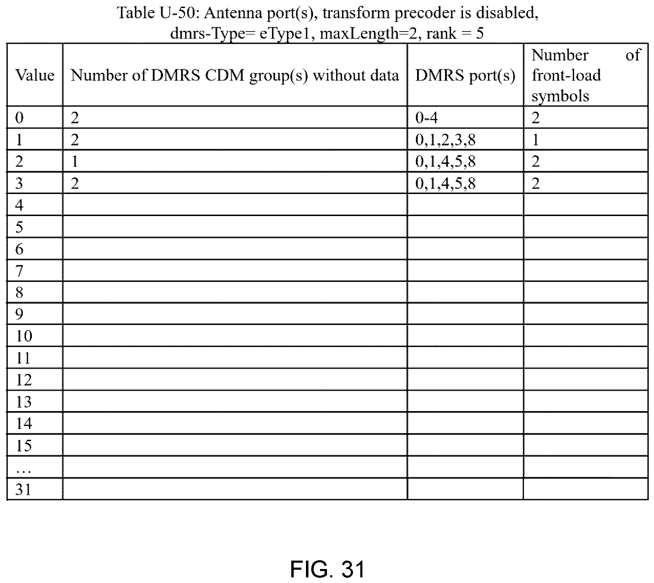

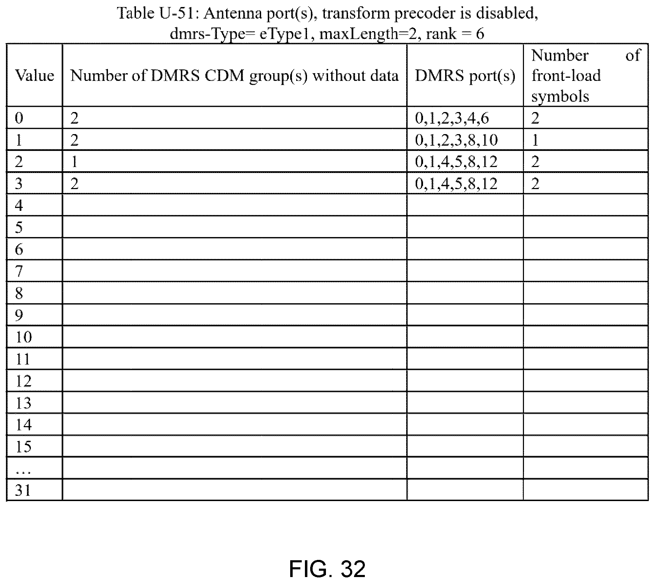

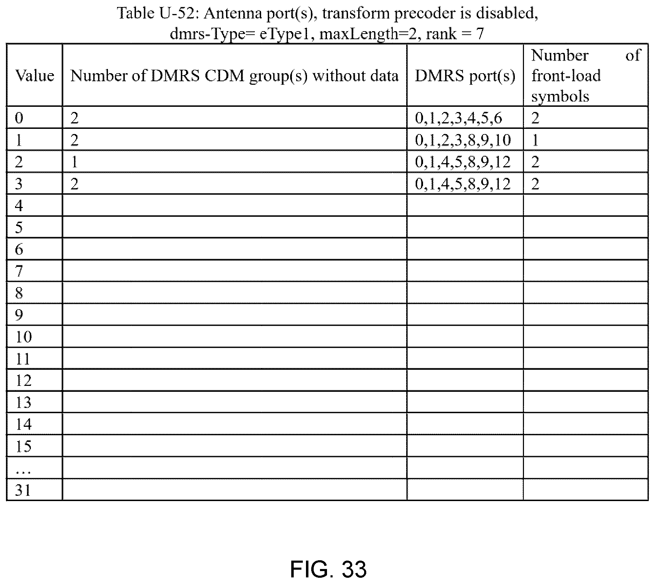

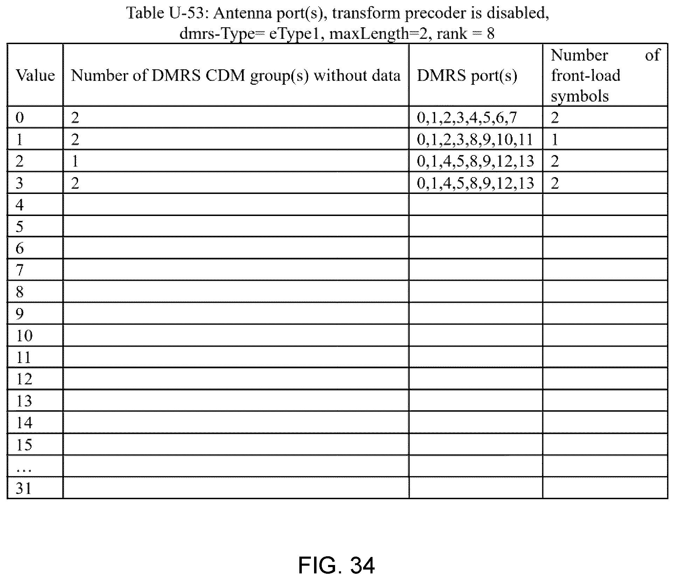

FIG. 27 shows an example of an antenna port table for PUSCH in a case of transform precoding disabled, DMRS type = enhanced type 1, maximum length = 2, and rank = 1. FIG. 28 shows an example of an antenna port table for PUSCH in a case of transform precoding disabled, DMRS type = enhanced type 1, maximum length = 2, and rank = 2. FIG. 29 shows an example of an antenna port table for PUSCH in a case of transform precoding disabled, DMRS type = enhanced type 1, maximum length = 2, and rank = 3. FIG. 30 shows an example of an antenna port table for PUSCH in a case of transform precoding disabled, DMRS type = enhanced type 1, maximum length = 2, and rank = 4. FIG. 31 shows an example of an antenna port table for PUSCH in a case of transform precoding disabled, DMRS type = enhanced type 1, maximum length = 2, and rank = 5. FIG. 32 shows an example of an antenna port table for PUSCH in a case of transform precoding disabled, DMRS type = enhanced type 1, maximum length = 2, and rank = 6. FIG. 33 shows an example of an antenna port table for PUSCH in a case of transform precoding disabled, DMRS type = enhanced type 1, maximum length = 2, and rank = 7. FIG. 34 shows an example of an antenna port table for PUSCH in a case of transform precoding disabled, DMRS type = enhanced type 1, maximum length = 2, and rank = 8. Each row in the antenna port tables corresponds to an antenna port field value. Each row further includes the number of DMRS CDM groups without data, a DMRS port combination (one or more DMRS ports), and the number of front-load symbols.

In an example of an antenna port table for PUSCH in a case of transform precoding disabled, DMRS type = enhanced type 1, maximum length = 2, and rank = 2, with respect to value = 3, the number of DMRS CDM groups without data = 2 and DMRS port combination = 0 and 2 is a specific DMRS port combination using CDM groups #0 and #1, respectively. Similarly, with respect to value = 20, the number of DMRS CDM groups without data = 2 and DMRS port combination = 9 and 11 is a specific DMRS port combination using CDM groups #0 and #1, respectively.

In an example of an antenna port table for PUSCH in a case of transform precoding disabled, DMRS type = enhanced type 1, maximum length = 2, and rank = 3, with respect to value = 0, the number of DMRS CDM groups without data = 2 and DMRS port combination = 0, 1, and 2 is a specific DMRS port combination using CDM groups #0, #0, and #1, respectively. Similarly, with respect to value = 17, the number of DMRS CDM groups without data = 2 and DMRS port combination = 7, 12, and 13 is a specific DMRS port combination using CDM groups #1, #0, and #0, respectively.

In an example of an antenna port table for PUSCH in a case of transform precoding disabled, DMRS type = enhanced type 1, maximum length = 2, and rank = 4, with respect to value = 0, the number of DMRS CDM groups without data = 2 and DMRS port combination = 0, 1, 2, and 3 is a specific DMRS port combination using CDM groups #0, #0, #1, and #1, respectively. Similarly, with respect to value = 3, the number of DMRS CDM groups without data = 2 and DMRS port combination = 0, 2, 4, and 6 is a specific DMRS port combination using CDM groups #0, #1, #0, and #1, respectively.

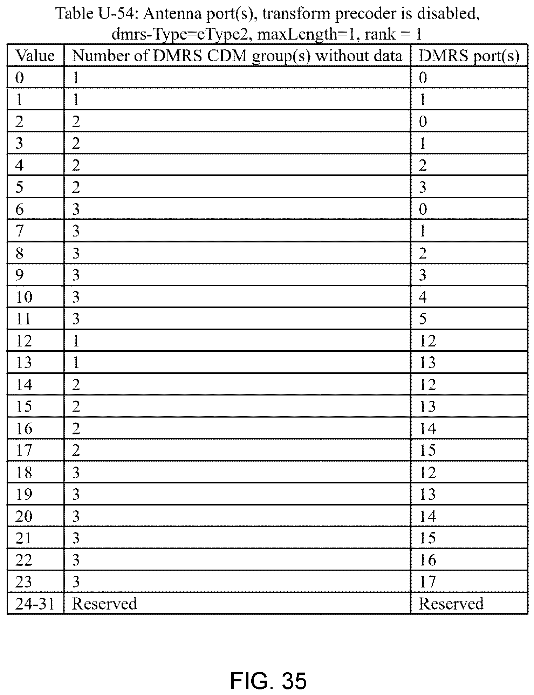

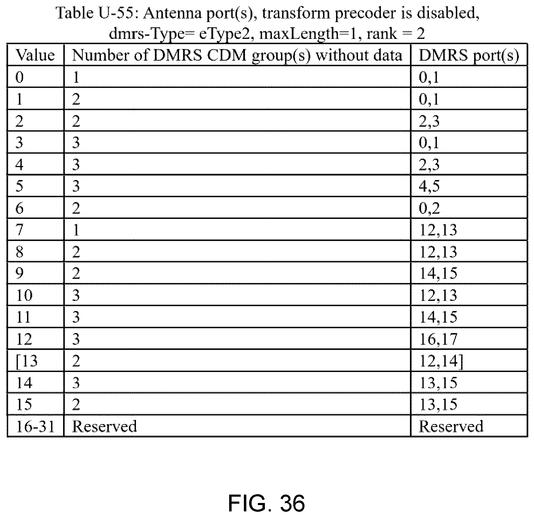

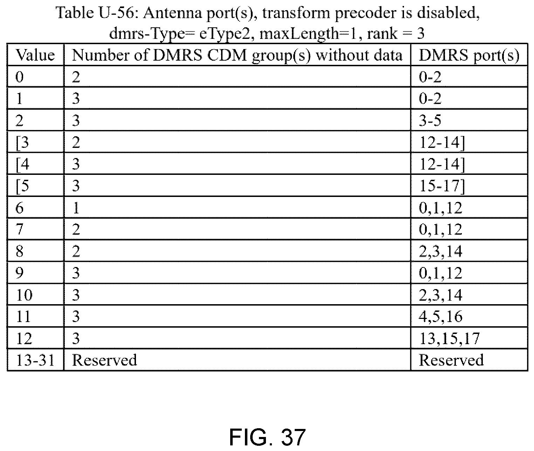

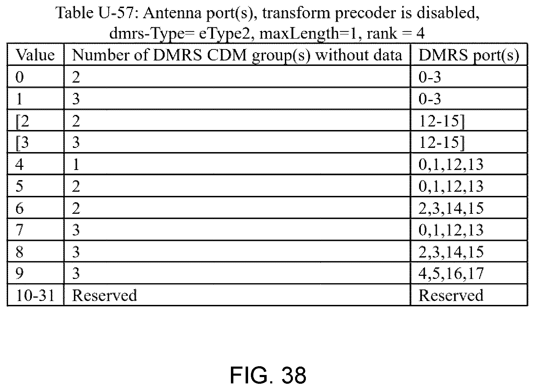

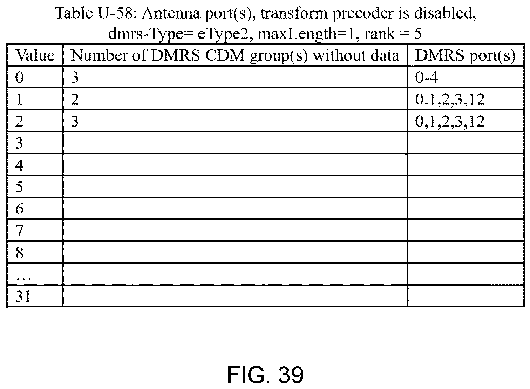

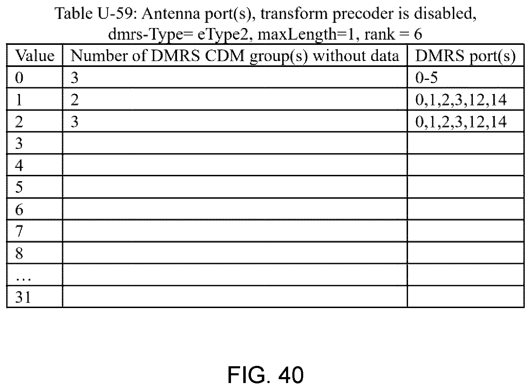

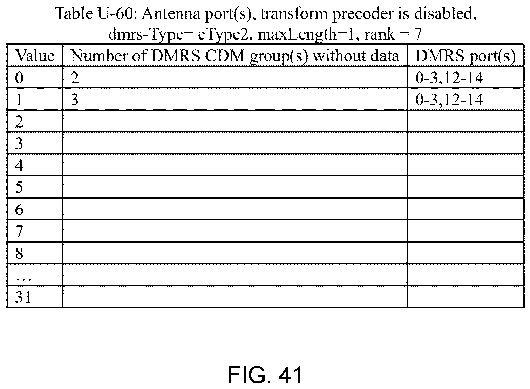

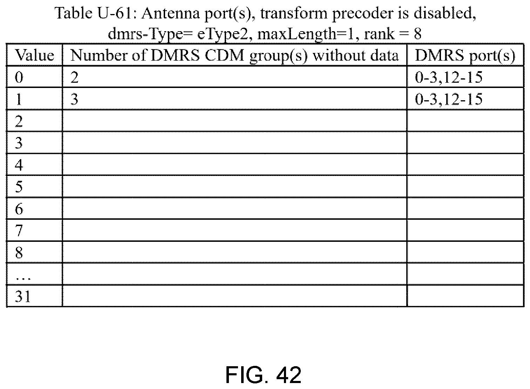

FIG. 35 shows an example of an antenna port table for PUSCH in a case of transform precoding disabled, DMRS type = enhanced type 2, maximum length = 1, and rank = 1. FIG. 36 shows an example of an antenna port table for PUSCH in a case of transform precoding disabled, DMRS type = enhanced type 2, maximum length = 1, and rank = 2. FIG. 37 shows an example of an antenna port table for PUSCH in a case of transform precoding disabled, DMRS type = enhanced type 2, maximum length = 1, and rank = 3. FIG. 38 shows an example of an antenna port table for PUSCH in a case of transform precoding disabled, DMRS type = enhanced type 2, maximum length = 1, and rank = 4. FIG. 39 shows an example of an antenna port table for PUSCH in a case of transform precoding disabled, DMRS type = enhanced type 2, maximum length = 1, and rank = 5. FIG. 40 shows an example of an antenna port table for PUSCH in a case of transform precoding disabled, DMRS type = enhanced type 2, maximum length = 1, and rank = 6. FIG. 41 shows an example of an antenna port table for PUSCH in a case of transform precoding disabled, DMRS type = enhanced type 2, maximum length = 1, and rank = 7. FIG. 42 shows an example of an antenna port table for PUSCH in a case of transform precoding disabled, DMRS type = enhanced type 2, maximum length = 1, and rank = 8. Each row in the antenna port tables corresponds to an antenna port field value. Each row further includes the number of DMRS CDM groups without data and a DMRS port combination (one or more DMRS ports).

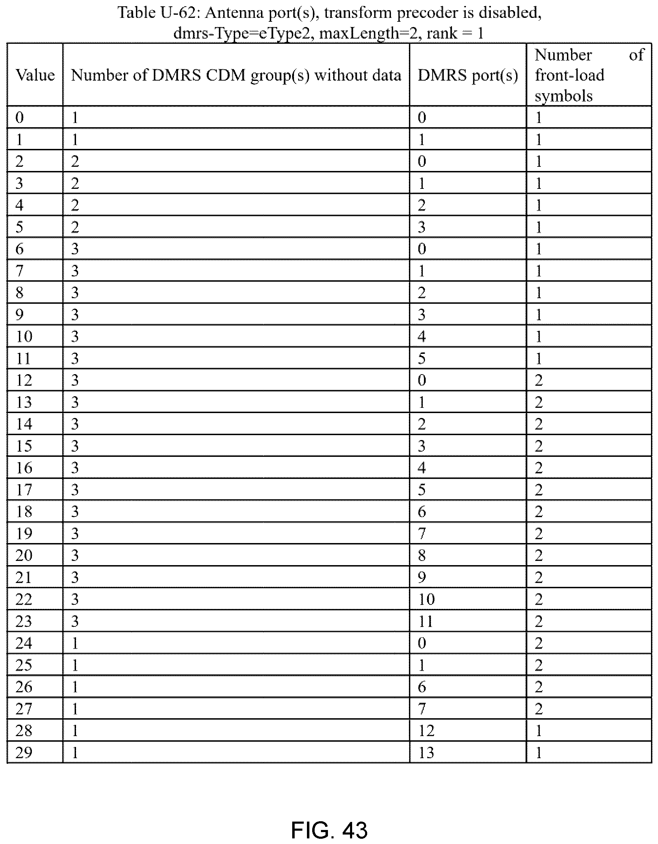

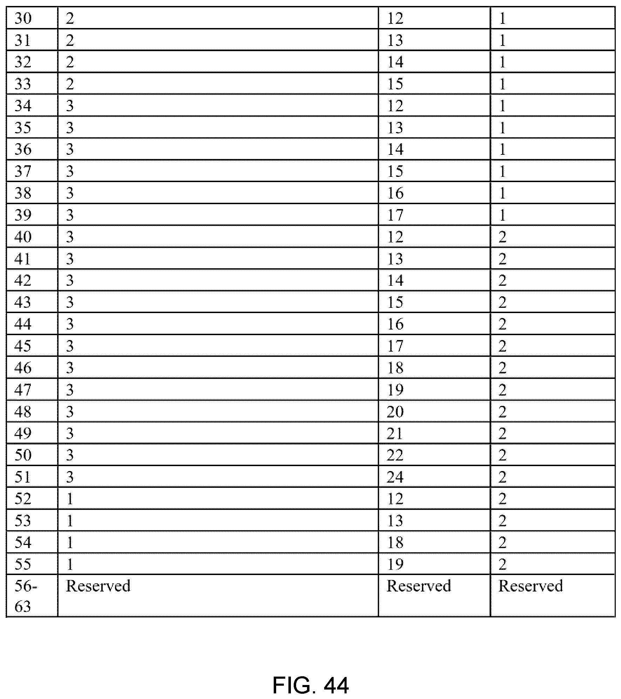

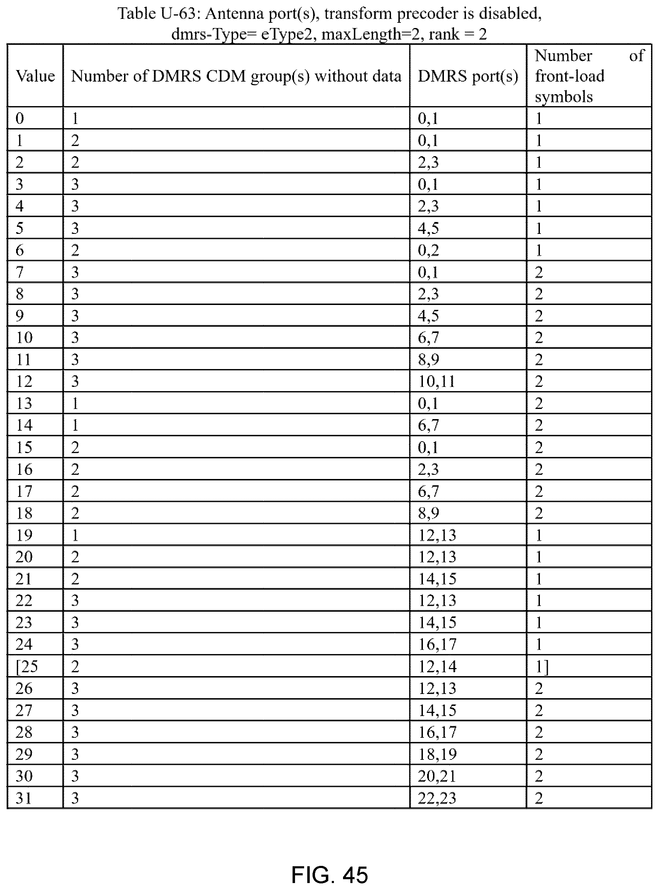

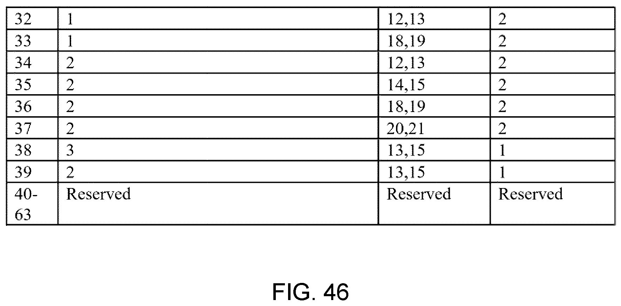

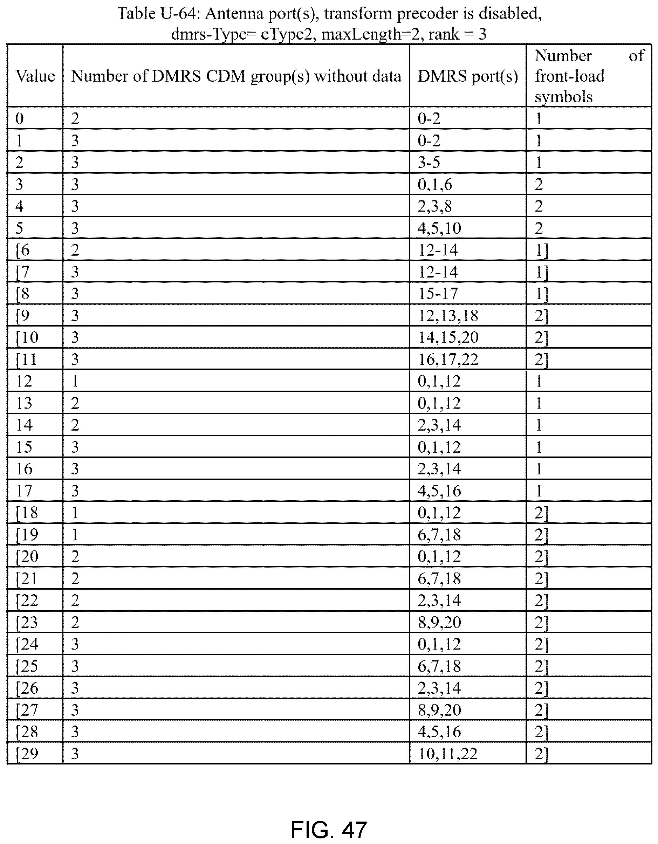

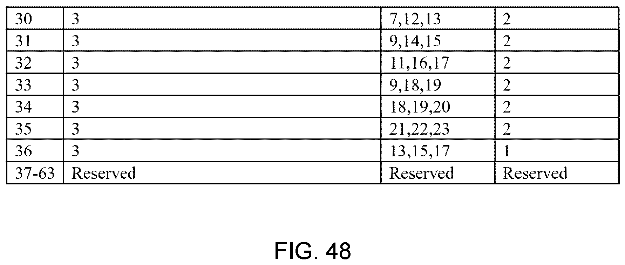

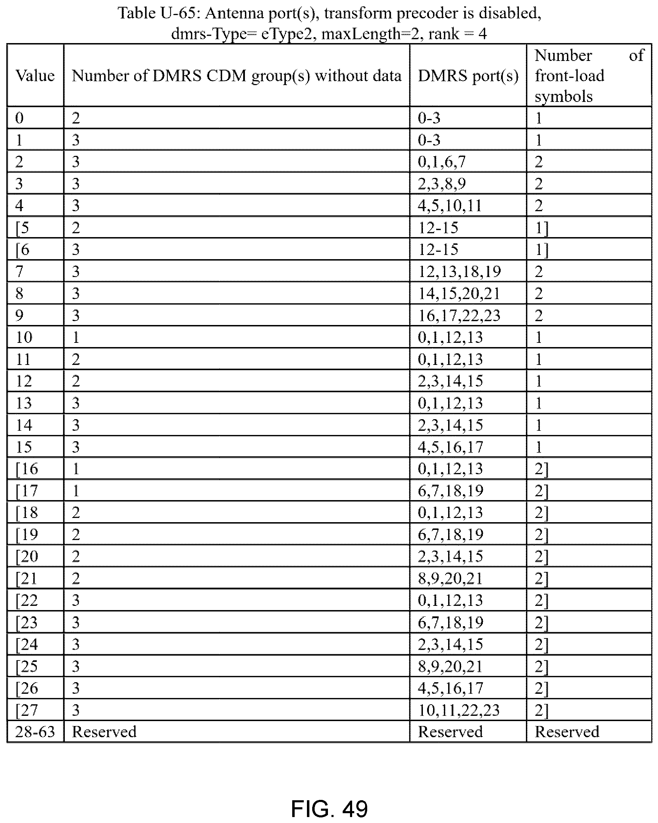

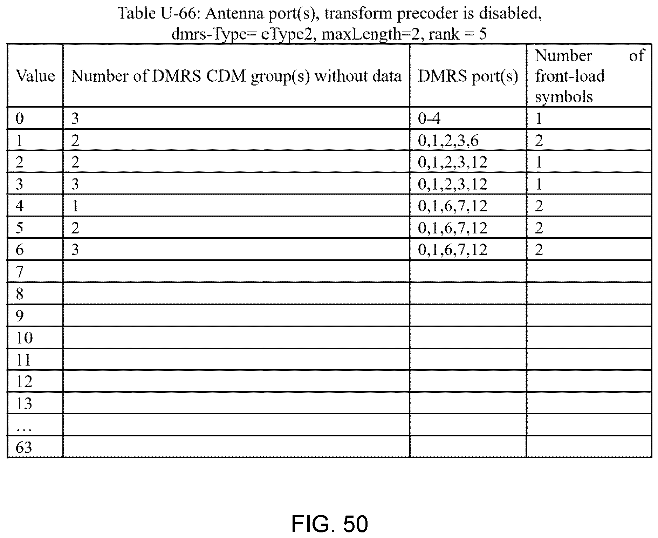

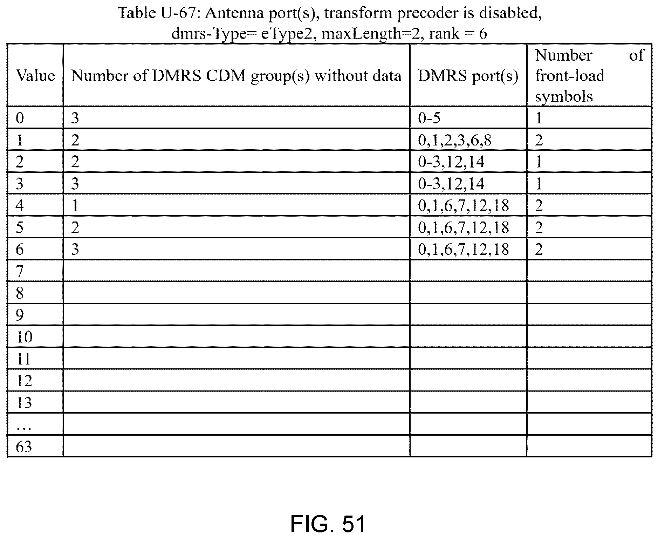

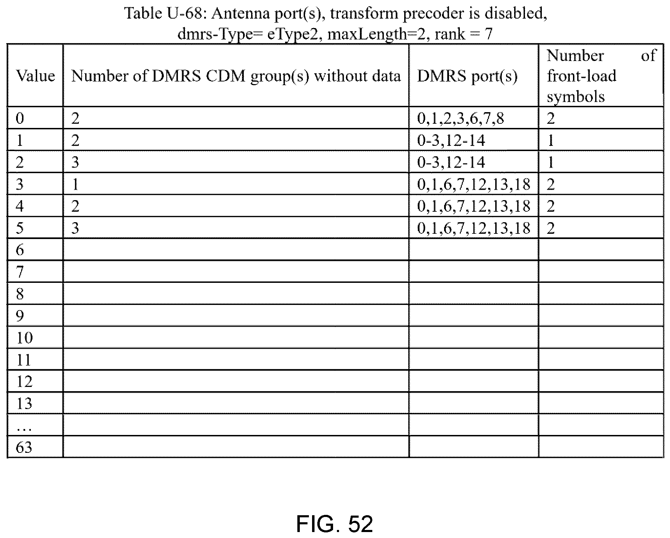

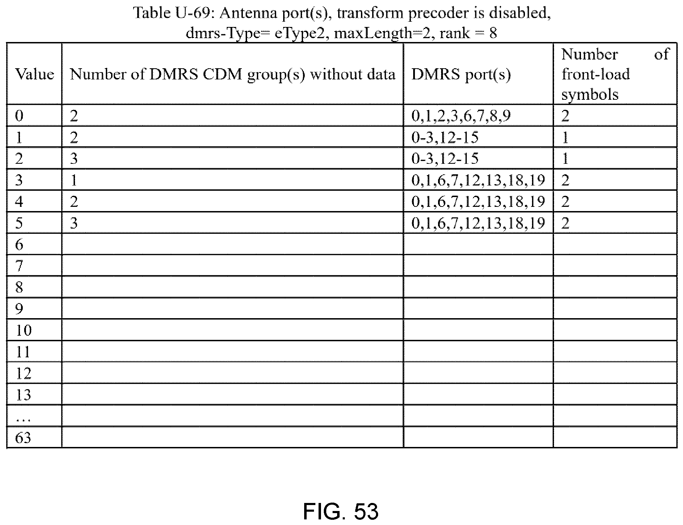

FIGS. 43 and 44 show an example of an antenna port table for PUSCH in a case of transform precoding disabled, DMRS type = enhanced type 2, maximum length = 2, and rank = 1. FIGS. 45 and 46 show an example of an antenna port table for PUSCH in a case of transform precoding disabled, DMRS type = enhanced type 2, maximum length = 2, and rank = 2. FIGS. 47 and 48 show an example of an antenna port table for PUSCH in a case of transform precoding disabled, DMRS type = enhanced type 2, maximum length = 2, and rank = 3. FIG. 49 shows an example of an antenna port table for PUSCH in a case of transform precoding disabled, DMRS type = enhanced type 2, maximum length = 2, and rank = 4. FIG. 50 shows an example of an antenna port table for PUSCH in a case of transform precoding disabled, DMRS type = enhanced type 2, maximum length = 2, and rank = 5. FIG. 51 shows an example of an antenna port table for PUSCH in a case of transform precoding disabled, DMRS type = enhanced type 2, maximum length = 2, and rank = 6. FIG. 52 shows an example of an antenna port table for PUSCH in a case of transform precoding disabled, DMRS type = enhanced type 2, maximum length = 2, and rank = 7. FIG. 53 shows an example of an antenna port table for PUSCH in a case of transform precoding disabled, DMRS type = enhanced type 2, maximum length = 2, and rank = 8. Each row in the antenna port tables corresponds to an antenna port field value. Each row further includes the number of DMRS CDM groups without data, a DMRS port combination (one or more DMRS ports), and the number of front-load symbols.

Only when a specific DMRS port combination is indicated, a UE may apply embodiment 0. In a case where no specific DMRS port combination is indicated (a case where a non-specific DMRS port combination is indicated), a UE may not apply embodiment 0. In the case where no specific DMRS port combination is indicated, for the UE, the normal DMRS sequence generation function and low-PAPR DMRS sequence generation function may be both applicable.

In a case where a DMRS port combination using only one CDM group is indicated, the UE may apply the normal DMRS sequence generation function. In a case where a DMRS port combination using a plurality of CDM groups is indicated, the UE may apply the low-PAPR DMRS sequence generation function.

The UE may report whether to support a specific DMRS port combination by using a UE capability. The UE may report whether to support a specific DMRS port combination in an enhanced DMRS type by using a UE capability. It may be defined in a specification that a UE not reporting supporting of a specific DMRS port combination does not assume that the specific DMRS port combination is indicated. It may be defined in a specification that such a UE not reporting supporting of a specific DMRS port combination assumes that a DMRS port combination using a single CDM group is indicated. It may be defined in a specification that such a UE not reporting supporting of a specific DMRS port combination assumes that a DMRS port combination using a single CDM group is indicated for ranks of 4 or less. For such a UE not reporting supporting of a specific DMRS port combination, a specific DMRS port combination may be indicated, for ranks of 4 or less.

Only when a specific rank is indicated, a UE may apply embodiment 1. Such a specific rank may be rank 2/3/4. In a case where rank 1 is indicated, the UE surely uses a single CDM group, and thus no specific DMRS port combination is indicated.

This embodiment enables a UE to use a DMRS appropriate for a specific DMRS port combination.

<Variation>

Each embodiment may be applied to a PUSCH only.

Each embodiment may be applied to a PDSCH only.

Each embodiment may be applied to either or both of the PDSCH and PUSCH.

Each embodiment may be applied to a DMRS port combination including only an existing DMRS port (a DMRS port applied with an existing FD-OCC), may be applied to a DMRS port combination including only a new DMRS port (a DMRS port applied with a new FD-OCC), or may be applied to all the DMRS port combinations.

The PUSCH in each embodiment may be a PUSCH with transform precoding (DFT-s-OFDM) disabled (using CP-OFDM).

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or any combination of them.

In a case where the notification described above is performed by a MAC CE, the MAC CE may be identified by a new logical channel ID (LCID) being included in a MAC subheader, the new LCID being not defined in any existing standard.

In a case where the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or any combination of them.

In a case where the notification described above is performed by a MAC CE, the MAC CE may be identified by a new LCID being included in a MAC subheader, the new LCID being not defined in any existing standard.

In a case where the notification is performed by UCI, the notification may be transmitted by using a PUCCH or a PUSCH.

Notification of any information from a UE in the above-described embodiments may be performed periodically, semi-persistently, or aperiodically.

{Application of Each Embodiment}

At least one of the above-described embodiments may be applied to a case satisfying a specific condition. The specific condition may be defined in a standard, or a UE/BS may be notified of the specific condition by using higher layer signaling/physical layer signaling. The specific condition may indicate at least one of the following:

- enabling of at least one of the above-described embodiments is configured

At least one of the above-described embodiments may be applied only to a UE that has reported a specific UE capability or that supports the specific UE capability. The specific UE capability may indicate at least one of the following:

- supporting, by a UE, of specific processing/operation/control/information for at least one of the above-described embodiments
- supporting of at least one of tables D-1-X to D-4-X2
- supporting of at least one of tables U-38 to U-69

The specific UE capability may be a capability applied over all the frequencies (in common irrespective of frequencies), capability per frequency (for example, one or any combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be a capability applied over all the duplex schemes (in common irrespective of duplex schemes) or capability per duplex scheme (for example, time division duplex (TDD) or frequency division duplex (FDD)).

At least one embodiment of the above-described embodiments may be applied to a case where the UE is configured/activated/triggered with specific information related to the embodiment (or performance of an operation for the embodiment) by higher layer signaling/physical layer signaling. The specific information may indicate at least one of the following:

- information indicating enabling/disabling of the operation for the embodiment
- RRC parameter for a specific release (for example, Rel. 18/19) In Rel. YY (for example, YY is 18 or greater), an RRC parameter that enables operation XXX may be denoted by XXX_rYY (XXX-rYY).
- specific enhanced-dmrs-Type_r18 in DMRS-DownlinkConfig

In a case where the UE does not support at least one of the specific UE capability or is not configured with the specific information, the UE may apply, for example, Rel-15/16 operation.

(Supplementary Note)

Regarding one embodiment of the present disclosure, the following supplementary notes of the invention will be given.

{Supplementary Note 1}

A terminal including:

a receiving section that receives a configuration of a physical uplink shared channel (PUSCH) and receives downlink control information (DCI) indicating a plurality of antenna ports of a demodulation reference signal (DMRS) for the PUSCH; and
a control section that judges, in a case where the configuration indicates that a frequency domain orthogonal cover code having a length more than 2 is applied to the DMRS, whether to apply a sequence depending on code division multiplexing (CDM) to the DMRS based on the configuration and the DCI.

{Supplementary Note 2}

The terminal according to supplementary note 1, wherein the control section judges, in the case where the configuration indicates that the frequency domain orthogonal cover code having the length more than 2 is applied to the DMRS, application of the sequence to the DMRS.

{Supplementary Note 3}

The terminal according to supplementary note 1 or 2, wherein the control section judges, in the case where the configuration indicates that the frequency domain orthogonal cover code having the length more than 2 is applied to the DMRS and where the plurality of antenna ports are provided over a plurality of CDM groups, application of the sequence to the DMRS.

{Supplementary Note 4}

The terminal according to any one of supplementary notes 1 to 3, wherein the control section reports supporting of the plurality of antenna ports provided over a plurality of CDM groups.

(Supplementary Note)

Regarding one embodiment of the present disclosure, the following supplementary notes of the invention will be given.

{Supplementary Note 1}

A terminal including:

a receiving section that receives a configuration of a physical downlink shared channel (PDSCH) and receives downlink control information (DCI) indicating a plurality of antenna ports of a demodulation reference signal (DMRS) for the PDSCH; and
a control section that judges, in a case where the configuration indicates that a frequency domain orthogonal cover code having a length more than 2 is applied to the DMRS, whether to apply a sequence depending on code division multiplexing (CDM) to the DMRS based on the configuration and the DCI.

{Supplementary Note 2}

The terminal according to supplementary note 1, wherein the control section judges, in the case where the configuration indicates that the frequency domain orthogonal cover code having the length more than 2 is applied to the DMRS, application of the sequence to the DMRS.

{Supplementary Note 3}

The terminal according to supplementary note 1 or 2, wherein the control section judges, in the case where the configuration indicates that the frequency domain orthogonal cover code having the length more than 2 is applied to the DMRS and where the plurality of antenna ports are provided over a plurality of CDM groups, application of the sequence to the DMRS.

{Supplementary Note 4}

The terminal according to any one of supplementary notes 1 to 3, wherein the control section reports supporting of the plurality of antenna ports provided over a plurality of CDM groups.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

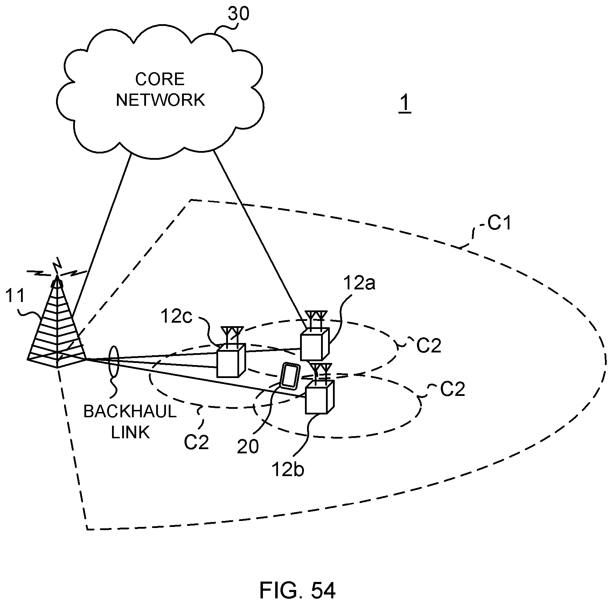

FIG. 54 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

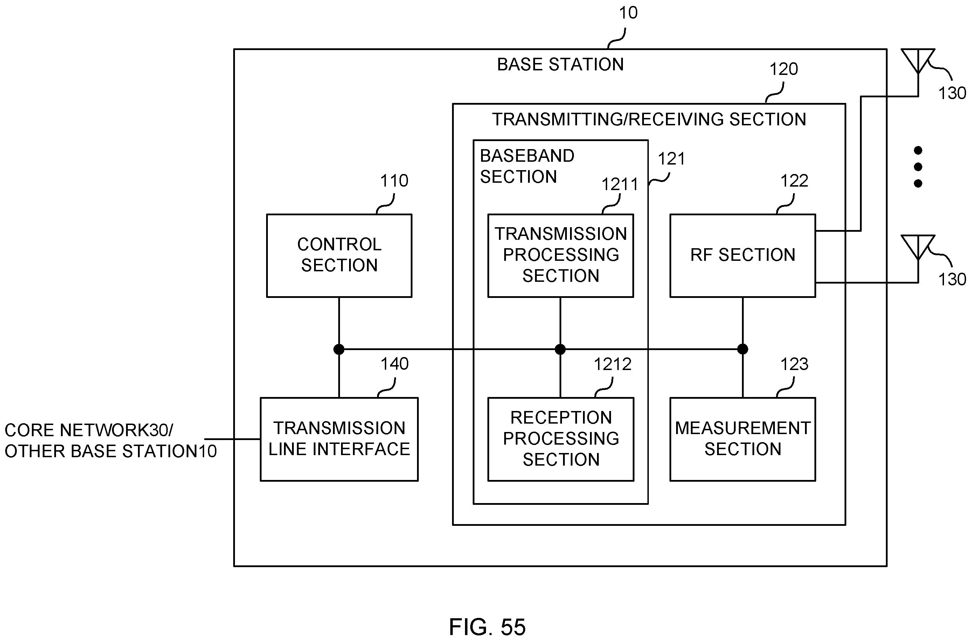

FIG. 55 is a diagram to show an example of a structure of the base station according to one embodiment. The base station 10 includes a control section 110, a transmitting/receiving section 120, transmitting/receiving antennas 130 and a transmission line interface (communication path interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration of a physical uplink shared channel (PUSCH) and transmit downlink control information (DCI) indicating a plurality of antenna ports of a demodulation reference signal (DMRS) for the PUSCH. The control section 110 may judge, in a case where the configuration indicates that a frequency domain orthogonal cover code having a length more than 2 is applied to the DMRS, whether to apply a sequence depending on code division multiplexing (CDM) to the DMRS based on the configuration and the DCI.

The transmitting/receiving section 120 may transmit a configuration of a physical downlink shared channel (PDSCH) and transmit downlink control information (DCI) indicating a plurality of antenna ports of a demodulation reference signal (DMRS) for the PDSCH. The control section 110 may judge, in a case where the configuration indicates that a frequency domain orthogonal cover code having a length more than 2 is applied to the DMRS, whether to apply a sequence depending on code division multiplexing (CDM) to the DMRS based on the configuration and the DCI.

(User Terminal)

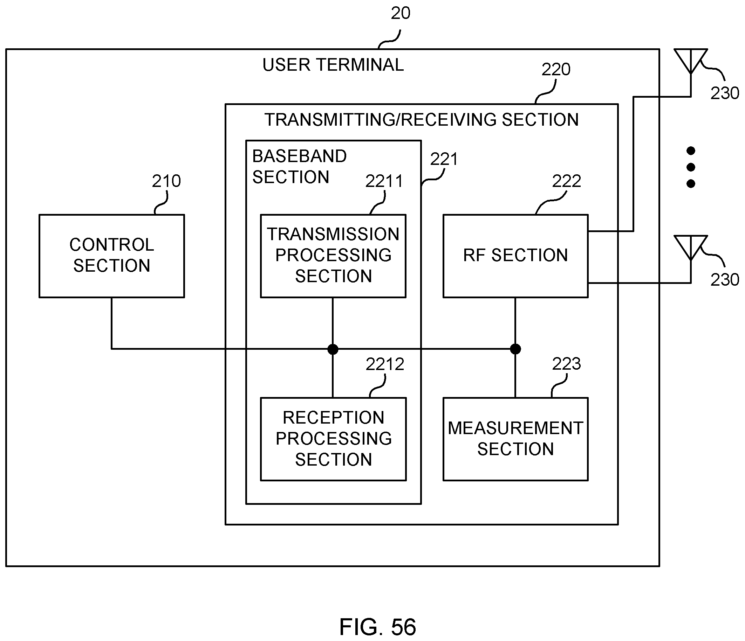

FIG. 56 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that the CSI-IM may be referred to as CSI-interference management (IM). The CSI-IM and a zero power (ZP) CSI-RS may be interchangeably interpreted. Note that, in the present disclosure, CSI-RS, NZP CSI-RS, ZP CSI-RS, CSI-IM, CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of a physical uplink shared channel (PUSCH) and receive downlink control information (DCI) indicating a plurality of antenna ports of a demodulation reference signal (DMRS) for the PUSCH. The control section 210 may judge, in a case where the configuration indicates that a frequency domain orthogonal cover code having a length more than 2 is applied to the DMRS, whether to apply a sequence depending on code division multiplexing (CDM) to the DMRS based on the configuration and the DCI.

The control section 210 may judge, in a case where the configuration indicates that the frequency domain orthogonal cover code having the length more than 2 is applied to the DMRS, application of the sequence to the DMRS.

The control section 210 may judge, in a case where the configuration indicates that the frequency domain orthogonal cover code having the length more than 2 is applied to the DMRS and where the plurality of antenna ports are provided over a plurality of CDM groups, application of the sequence to the DMRS.

The control section 210 may report supporting of the plurality of antenna ports provided over a plurality of CDM groups.

The transmitting/receiving section 220 may receive a configuration of a physical downlink shared channel (PDSCH) and receive downlink control information (DCI) indicating a plurality of antenna ports of a demodulation reference signal (DMRS) for the PDSCH. The control section 210 may judge, in a case where the configuration indicates that a frequency domain orthogonal cover code having a length more than 2 is applied to the DMRS, whether to apply a sequence depending on code division multiplexing (CDM) to the DMRS based on the configuration and the DCI.

The control section 210 may judge, in a case where the configuration indicates that the frequency domain orthogonal cover code having the length more than 2 is applied to the DMRS, application of the sequence to the DMRS.

The control section 210 may judge, in a case where the configuration indicates that the frequency domain orthogonal cover code having the length more than 2 is applied to the DMRS and where the plurality of antenna ports are provided over a plurality of CDM groups, application of the sequence to the DMRS.

The control section 210 may report supporting of the plurality of antenna ports provided over a plurality of CDM groups.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

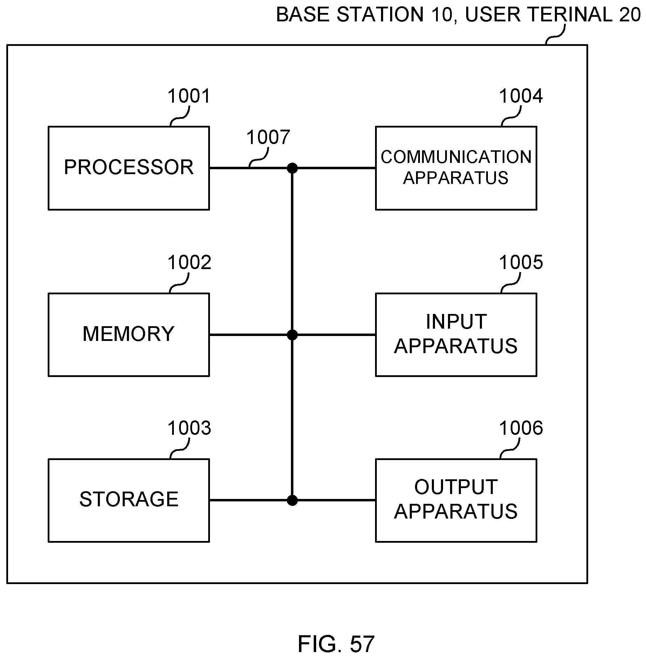

For example, a base station, a user terminal, and so on according to one embodiment of the present disclosure may function as a computer that executes the processes of the radio communication method of the present disclosure. FIG. 57 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

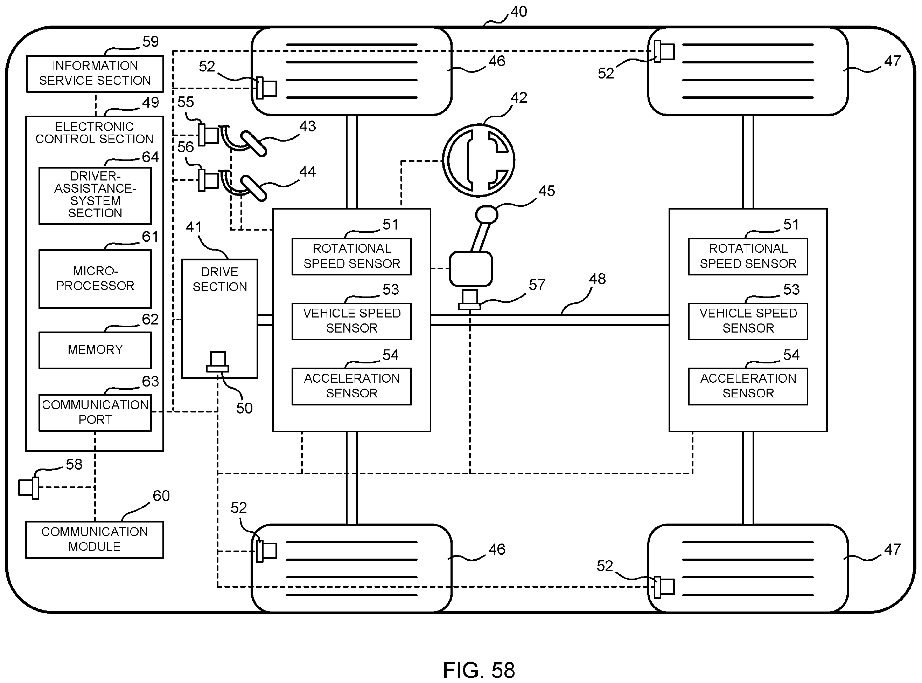

FIG. 58 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A terminal comprising:

   a receiving section that receives a configuration of a physical downlink shared channel (PDSCH) and receives downlink control information (DCI) indicating a plurality of antenna ports of a demodulation reference signal (DMRS) for the PDSCH; and
   a control section that judges, in a case where the configuration indicates that a frequency domain orthogonal cover code having a length more than 2 is applied to the DMRS, whether to apply a sequence depending on code division multiplexing (CDM) to the DMRS based on the configuration and the DCI.

2. The terminal according to claim 1, wherein
   the control section judges, in the case where the configuration indicates that the frequency domain orthogonal cover code having the length more than 2 is applied to the DMRS, application of the sequence to the DMRS.

3. The terminal according to claim 1, wherein
   the control section judges, in the case where the configuration indicates that the frequency domain orthogonal cover code having the length more than 2 is applied to the DMRS and where the plurality of antenna ports are provided over a plurality of CDM groups, application of the sequence to the DMRS.

4. The terminal according to claim 1, wherein
   the control section reports supporting of the plurality of antenna ports provided over a plurality of CDM groups.

5. A radio communication method for a terminal, comprising:

receiving a configuration of a physical downlink shared channel (PDSCH);

receiving downlink control information (DCI) indicating a plurality of antenna ports of a demodulation reference signal (DMRS) for the PDSCH; and

judging, in a case where the configuration indicates that a frequency domain orthogonal cover code having a length more than 2 is applied to the DMRS, whether to apply a sequence depending on code division multiplexing (CDM) to the DMRS based on the configuration and the DCI.

6. A base station comprising:

a transmitting section that transmits a configuration of a physical downlink shared channel (PDSCH) and transmits downlink control information (DCI) indicating a plurality of antenna ports of a demodulation reference signal (DMRS) for the PDSCH; and

a control section that judges, in a case where the configuration indicates that a frequency domain orthogonal cover code having a length more than 2 is applied to the DMRS, whether to apply a sequence depending on code division multiplexing (CDM) to the DMRS based on the configuration and the DCI.

## FIG. 1A

### Parameters for PDSCH DM-RS configuration type 1.

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

## FIG. 1B

### Parameters for PDSCH DM-RS configuration type 2.

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

# FIG. 2A

## Parameters for PUSCH DM-RS configuration type 1.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

# FIG. 2B

## Parameters for PUSCH DM-RS configuration type 2.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

FIG. 3A

| FD-OCC index | Wf(0) | Wf(1) | Wf(2) | Wf(3) |
|---|---|---|---|---|
| 0 | +1 | +1 | +1 | +1 |
| 1 | +1 | -1 | +1 | -1 |
| 2 | +1 | +1 | -1 | -1 |
| 3 | +1 | -1 | -1 | +1 |

FIG. 3B

| FD-OCC index | Wf(0) | Wf(1) | Wf(2) | Wf(3) |
|---|---|---|---|---|
| 0 | +1 | +1 | +1 | +1 |
| 1 | +1 | -1 | +1 | -1 |
| 2 | +1 | +j | -1 | -j |
| 3 | +1 | -j | -1 | +j |

FIG. 3C

| TD-OCC index | Wt(0) | Wt(1) |
|---|---|---|
| 0 | +1 | +1 |
| 1 | +1 | -1 |

EP 4 776 732 A1

# FIG. 4A

eType1

# FIG. 4B

eType2

## FIG. 5A

DMRS eType 1

DMRS port #0

$W_f(1)$
$W_f(0)$
$W_f(3)$
$W_f(2)$
$W_f(1)$
$W_f(0)$

Subcarrier

OFDM Symbol

DMRS

## FIG. 5B

DMRS eType 1

DMRS port #2

$W_f(1)$
$W_f(0)$
$W_f(3)$
$W_f(2)$
$W_f(1)$
$W_f(0)$

Subcarrier

OFDM Symbol

DMRS

EP 4 776 732 A1

# FIG. 6A

DMRS eType 2

DMRS port #0

DMRS

# FIG. 6B

DMRS eType 2

DMRS port #2

DMRS

DMRS eType 2

DMRS port #4

FIG. 7

EP 4 776 732 A1

Table D-1-X: Antenna port(s) (1000 + DMRS port), *dmrs-Type*=eType1, *maxLength*=1

| One Codeword: Codeword 0 enabled, Codeword 1 disabled | | | | Two Codewords: Codeword 0 enabled, Codeword 1 enabled | | |
|---|---|---|---|---|---|---|
| Value | Number of DMRS CDM group(s) without data | DMRS port(s) | Notes | Value | Number of DMRS CDM group(s) without data | DMRS port(s) |
| 0 | 1 | 0 | | 0 | 2 | 0,1,2,3,8 |
| 1 | 1 | 1 | | 1 | 2 | 0,1,2,3,8,10 |
| 2 | 1 | 0,1 | | 2 | 2 | 0,1,2,3,8,9,10 |
| 3 | 2 | 0 | | 3 | 2 | 0,1,2,3,8,9,10,11 |
| 4 | 2 | 1 | | | | |
| 5 | 2 | 2 | Cat. 1 | | | |
| 6 | 2 | 3 | | | | |
| 7 | 2 | 0,1 | | | | |
| 8 | 2 | 2,3 | | | | |
| 9 | 2 | 0-2 | | | | |
| 10 | 2 | 0-3 | | | | |
| 11 | 2 | 0,2 | | | | |
| 12 | 1 | 8 | | | | |
| 13 | 1 | 9 | | | | |
| 14 | 1 | 8,9 | | | | |
| 15 | 2 | 8 | | | | |
| 16 | 2 | 9 | | | | |
| 17 | 2 | 10 | Cat.2 | | | |
| 18 | 2 | 11 | | | | |
| 19 | 2 | 8,9 | | | | |
| 20 | 2 | 10,11 | | | | |
| | | | | | | |
| | | | | | | |
| | | | | | | |
| 24 | 1 | 0,1,8 | | | | |
| 25 | 1 | 0,1,8,9 | | | | |
| 26 | 2 | 0,1,8 | Cat.3 | | | |
| 27 | 2 | 0,1,8,9 | | | | |
| 28 | 2 | 2,3,10 | | | | |
| 29 | 2 | 2,3,10,11 | | | | |

FIG. 8

Table D-2-X: Antenna port(s) (1000 + DMRS port), *dmrs-Type*=eType1, *maxLength*=2

| One Codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4 | 2 | 0,1,2,3,8 | 1 |
| 5 | 2 | 2 | 1 | 5 | 2 | 0,1,2,3,8,10 | 1 |
| 6 | 2 | 3 | 1 | 6 | 2 | 0,1,2,3,8,9,10 | 1 |
| 7 | 2 | 0,1 | 1 | 7 | 2 | 0,1,2,3,8,9,10,11 | 1 |
| 8 | 2 | 2,3 | 1 | 8 | 1 | 0,1,4,5,8 | 2 |
| 9 | 2 | 0-2 | 1 | 9 | 1 | 0,1,4,5,8,12 | 2 |
| 10 | 2 | 0-3 | 1 | 10 | 1 | 0,1,4,5,8,9,12 | 2 |
| 11 | 2 | 0,2 | 1 | 11 | 1 | 0,1,4,5,8,9,12,13 | 2 |
| 12 | 2 | 0 | 2 | 12 | 2 | 0,1,4,5,8 | 2 |
| 13 | 2 | 1 | 2 | 13 | 2 | 0,1,4,5,8,12 | 2 |
| 14 | 2 | 2 | 2 | 14 | 2 | 0,1,4,5,8,9,12 | 2 |
| 15 | 2 | 3 | 2 | 15 | 2 | 0,1,4,5,8,9,12,13 | 2 |
| 16 | 2 | 4 | 2 | | | | |
| 17 | 2 | 5 | 2 | | | | |
| 18 | 2 | 6 | 2 | | | | |
| 19 | 2 | 7 | 2 | | | | |

FIG. 9

| 20 | 2 | 0,1 | 2 | | | | |
|----|---|-----|---|---|---|---|---|
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | 1 | 8 | 1 | | | | |
| 32 | 1 | 9 | 1 | | | | |
| 33 | 1 | 8,9 | 1 | | | | |
| 34 | 2 | 8 | 1 | | | | |
| 35 | 2 | 9 | 1 | | | | |
| 36 | 2 | 10 | 1 | | | | |
| 37 | 2 | 11 | 1 | | | | |
| 38 | 2 | 8,9 | 1 | | | | |
| 39 | 2 | 10,11 | 1 | | | | |
| | | | | | | | |
| | | | | | | | |
| | | | | | | | |
| 43 | 2 | 8 | 2 | | | | |
| 44 | 2 | 9 | 2 | | | | |
| 45 | 2 | 10 | 2 | | | | |
| 46 | 2 | 11 | 2 | | | | |
| 47 | 2 | 12 | 2 | | | | |
| 48 | 2 | 13 | 2 | | | | |
| 49 | 2 | 14 | 2 | | | | |
| 50 | 2 | 15 | 2 | | | | |

FIG. 10

| | | | | | | |
|---|---|---|---|---|---|---|
| 51 | 2 | 8,9 | 2 | | | |
| 52 | 2 | 10,11 | 2 | | | |
| 53 | 2 | 12,13 | 2 | | | |
| 54 | 2 | 14,15 | 2 | | | |
| | | | | | | |
| | | | | | | |
| | | | | | | |
| | | | | | | |
| | | | | | | |
| | | | | | | |
| | | | | | | |
| 62 | 1 | 0,1,8 | 1 | | | |
| 63 | 1 | 0,1,8,9 | 1 | | | |
| 64 | 2 | 0,1,8 | 1 | | | |
| 65 | 2 | 0,1,8,9 | 1 | | | |
| 66 | 2 | 2,3,10 | 1 | | | |
| 67 | 2 | 2,3,10,11 | 1 | | | |
| | | | | | | |
| | | | | | | |
| | | | | | | |
| | | | | | | |
| 73 | 2 | 0,1,8 | 2 | | | |
| 74 | 2 | 0,1,8,9 | 2 | | | |
| 75 | 2 | 4,5,12 | 2 | | | |
| 76 | 2 | 4,5,12,13 | 2 | | | |
| 77 | 2 | 2,3,10 | 2 | | | |
| 78 | 2 | 2,3,10,11 | 2 | | | |
| 79 | 2 | 6,7,14 | 2 | | | |
| 80 | 2 | 6,7,14,15 | 2 | | | |
| | | | | | | |
| | | | | | | |
| | | | | | | |

FIG. 11

Table D-3-X: Antenna port(s) (1000 + DMRS port), *dmrs-Type*=eType2, *maxLength*=1

| One codeword: Codeword 0 enabled, Codeword 1 disabled | | | Two codewords: Codeword 0 enabled, Codeword 1 enabled | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | | | |
| 3 | 2 | 0 | | | |
| 4 | 2 | 1 | 4 | 2 | 0,1,2,3,12 |
| 5 | 2 | 2 | 5 | 2 | 0,1,2,3,12,14 |
| 6 | 2 | 3 | 6 | 2 | 0-3,12-14 |
| 7 | 2 | 0,1 | 7 | 2 | 0-3,12-15 |
| 8 | 2 | 2,3 | 8 | 3 | 0,1,2,3,12 |
| 9 | 2 | 0-2 | 9 | 3 | 0,1,2,3,12,14 |
| 10 | 2 | 0-3 | 10 | 3 | 0-3,12-14 |
| 11 | 3 | 0 | 11 | 3 | 0-3,12-15 |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 1 | 12 | | | |
| 25 | 1 | 13 | | | |
| 26 | 1 | 12,13 | | | |

FIG. 12

| 27 | 2 | 12 | | | |
|----|---|----|---|---|---|
| 28 | 2 | 13 | | | |
| 29 | 2 | 14 | | | |
| 30 | 2 | 15 | | | |
| 31 | 2 | 12,13 | | | |
| 32 | 2 | 14,15 | | | |
| | | | | | |
| | | | | | |
| 35 | 3 | 12 | | | |
| 36 | 3 | 13 | | | |
| 37 | 3 | 14 | | | |
| 38 | 3 | 15 | | | |
| 39 | 3 | 16 | | | |
| 40 | 3 | 17 | | | |
| 41 | 3 | 12,13 | | | |
| 42 | 3 | 14,15 | | | |
| 43 | 3 | 16,17 | | | |
| | | | | | |
| | | | | | |
| | | | | | |
| | | | | | |
| 48 | 1 | 0,1,12 | | | |
| 49 | 1 | 0,1,12,13 | | | |
| 50 | 2 | 0,1,12 | | | |
| 51 | 2 | 0,1,12,13 | | | |
| 52 | 2 | 2,3,14 | | | |
| 53 | 2 | 2,3,14,15 | | | |
| 54 | 3 | 0,1,12 | | | |
| 55 | 3 | 0,1,12,13 | | | |
| 56 | 3 | 2,3,14 | | | |
| 57 | 3 | 2,3,14,15 | | | |
| 58 | 3 | 4,5,16 | | | |
| 59 | 3 | 4,5,16,17 | | | |
| | | | | | |
| | | | | | |
| | | | | | |

FIG. 13

Table D-4-X: Antenna port(s) (1000 + DMRS port), dmrs-Type=eType2, maxLength=2

| One codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6 | 2 | 0,1,2,3,12 | 1 |
| 7 | 2 | 0,1 | 1 | 7 | 2 | 0-3,12,14 | 1 |
| 8 | 2 | 2,3 | 1 | 8 | 2 | 0-3,12-14 | 1 |
| 9 | 2 | 0-2 | 1 | 9 | 2 | 0-3,12-15 | 1 |
| 10 | 2 | 0-3 | 1 | 10 | 3 | 0,1,2,3,12 | 1 |
| 11 | 3 | 0 | 1 | 11 | 3 | 0-3,12,14 | 1 |
| 12 | 3 | 1 | 1 | 12 | 3 | 0-3,12-14 | 1 |
| 13 | 3 | 2 | 1 | 13 | 3 | 0-3,12-15 | 1 |
| 14 | 3 | 3 | 1 | 14 | 1 | 0,1,6,7,12 | 2 |
| 15 | 3 | 4 | 1 | 15 | 1 | 0,1,6,7,12,18 | 2 |
| 16 | 3 | 5 | 1 | 16 | 1 | 0,1,6,7,12,13,18 | 2 |
| 17 | 3 | 0,1 | 1 | 17 | 1 | 0,1,6,7,12,13,18,19 | 2 |
| 18 | 3 | 2,3 | 1 | 18 | 2 | 0,1,6,7,12 | 2 |
| 19 | 3 | 4,5 | 1 | 19 | 2 | 0,1,6,7,12,18 | 2 |
| 20 | 3 | 0-2 | 1 | 20 | 2 | 0,1,6,7,12,13,18 | 2 |
| 21 | 3 | 3-5 | 1 | 21 | 2 | 0,1,6,7,12,13,18,19 | 2 |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |

FIG. 14

| | | | | | | | |
|----|----|--------|---|----|---|----------------------|---|
| 26 | 3 | 2 | 2 | 26 | 3 | 0,1,6,7,12 | 2 |
| 27 | 3 | 3 | 2 | 27 | 3 | 0,1,6,7,12,18 | 2 |
| 28 | 3 | 4 | 2 | 28 | 3 | 0,1,6,7,12,13,18 | 2 |
| 29 | 3 | 5 | 2 | 29 | 3 | 0,1,6,7,12,13,18,19 | 2 |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58 | 1 | 12 | 1 | | | | |
| 59 | 1 | 13 | 1 | | | | |
| 60 | 1 | 12,13 | 1 | | | | |
| 61 | 2 | 12 | 1 | | | | |

FIG. 15

| | | | | | | | |
|---|---|---|---|---|---|---|---|
| 62 | 2 | 13 | 1 | | | | |
| 63 | 2 | 14 | 1 | | | | |
| 64 | 2 | 15 | 1 | | | | |
| 65 | 2 | 12,13 | 1 | | | | |
| 66 | 2 | 14,15 | 1 | | | | |
| | | | | | | | |
| | | | | | | | |
| 69 | 3 | 12 | 1 | | | | |
| 70 | 3 | 13 | 1 | | | | |
| 71 | 3 | 14 | 1 | | | | |
| 72 | 3 | 15 | 1 | | | | |
| 73 | 3 | 16 | 1 | | | | |
| 74 | 3 | 17 | 1 | | | | |
| 75 | 3 | 12,13 | 1 | | | | |
| 76 | 3 | 14,15 | 1 | | | | |
| 77 | 3 | 16,17 | 1 | | | | |
| | | | | | | | |
| | | | | | | | |
| | | | | | | | |
| | | | | | | | |
| 82 | 3 | 12 | 2 | | | | |
| 83 | 3 | 13 | 2 | | | | |
| 84 | 3 | 14 | 2 | | | | |
| 85 | 3 | 15 | 2 | | | | |
| 86 | 3 | 16 | 2 | | | | |
| 87 | 3 | 17 | 2 | | | | |
| 88 | 3 | 18 | 2 | | | | |
| 89 | 3 | 19 | 2 | | | | |
| 90 | 3 | 20 | 2 | | | | |
| 91 | 3 | 21 | 2 | | | | |
| 92 | 3 | 22 | 2 | | | | |
| 93 | 3 | 23 | 2 | | | | |
| 94 | 3 | 12,13 | 2 | | | | |
| 95 | 3 | 14,15 | 2 | | | | |
| 96 | 3 | 16,17 | 2 | | | | |
| 97 | 3 | 18,19 | 2 | | | | |
| 98 | 3 | 20,21 | 2 | | | | |
| 99 | 3 | 22,23 | 2 | | | | |

FIG. 16

| 106 | 1 | 12 | 2 | | | | |
|---|---|---|---|---|---|---|---|
| 107 | 1 | 13 | 2 | | | | |
| 108 | 1 | 18 | 2 | | | | |
| 109 | 1 | 19 | 2 | | | | |
| 110 | 1 | 12,13 | 2 | | | | |
| 111 | 1 | 18,19 | 2 | | | | |
| 112 | 2 | 12,13 | 2 | | | | |
| 113 | 2 | 14,15 | 2 | | | | |
| 114 | 2 | 18,19 | 2 | | | | |
| 115 | 2 | 20,21 | 2 | | | | |
| 116 | 1 | 0,1,12 | 1 | | | | |
| 117 | 1 | 0,1,12,13 | 1 | | | | |
| 118 | 2 | 0,1,12 | 1 | | | | |
| 119 | 2 | 0,1,12,13 | 1 | | | | |
| 120 | 2 | 2,3,14 | 1 | | | | |
| 121 | 2 | 2,3,14,15 | 1 | | | | |
| 122 | 3 | 0,1,12 | 1 | | | | |
| 123 | 3 | 0,1,12,13 | 1 | | | | |
| 124 | 3 | 2,3,14 | 1 | | | | |
| 125 | 3 | 2,3,14,15 | 1 | | | | |
| 126 | 3 | 4,5,16 | 1 | | | | |
| 127 | 3 | 4,5,16,17 | 1 | | | | |

FIG. 17

| 133 | 2 | 0,1,12 | 2 | | | | |
|-----|---|--------|---|---|---|---|---|
| 134 | 2 | 0,1,12,13 | 2 | | | | |
| 135 | 2 | 6,7,18 | 2 | | | | |
| 136 | 2 | 6,7,18,19 | 2 | | | | |
| 137 | 2 | 2,3,14 | 2 | | | | |
| 138 | 2 | 2,3,14,15 | 2 | | | | |
| 139 | 2 | 8,9,20 | 2 | | | | |
| 140 | 2 | 8,9,20,21 | 2 | | | | |
| 141 | 3 | 0,1,12 | 2 | | | | |
| 142 | 3 | 0,1,12,13 | 2 | | | | |
| 143 | 3 | 6,7,18 | 2 | | | | |
| 144 | 3 | 6,7,18,19 | 2 | | | | |
| 145 | 3 | 2,3,14 | 2 | | | | |
| 146 | 3 | 2,3,14,15 | 2 | | | | |
| 147 | 3 | 8,9,20 | 2 | | | | |
| 148 | 3 | 8,9,20,21 | 2 | | | | |
| 149 | 3 | 4,5,16 | 2 | | | | |
| 150 | 3 | 4,5,16,17 | 2 | | | | |
| 151 | 3 | 10,11,22 | 2 | | | | |
| 152 | 3 | 10,11,22,23 | 2 | | | | |
| | | | | | | | |
| | | | | | | | |
| | | | | | | | |
| | | | | | | | |
| | | | | | | | |
| | | | | | | | |

FIG. 18

50

Table U-38: Antenna port(s), transform precoder is disabled,
dmrs-Type=eType1, maxLength=1, rank = 1

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 1 | 8 |
| 7 | 1 | 9 |
| 8 | 2 | 8 |
| 9 | 2 | 9 |
| 10 | 2 | 10 |
| 11 | 2 | 11 |
| 12-15 | Reserved | Reserved |

FIG. 19

Table U-39: Antenna port(s), transform precoder is disabled,
dmrs-Type= eType1, maxLength=1, rank = 2

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 2 | 0,2 |
| 4 | 1 | 8,9 |
| 5 | 2 | 8,9 |
| 6 | 2 | 10,11 |
| 7 | 2 | 9,11 |
| 8-15 | Reserved | Reserved |

# FIG. 20

Table U-40: Antenna port(s), transform precoder is disabled,
dmrs-Type= eType1, maxLength=1, rank = 3

| Value | Number of DMRS CDM group(s) without data | DMRS port(s) |
|-------|------------------------------------------|--------------|
| 0 | 2 | 0-2 |
| 1 | 2 | 8-10 |
| 2 | 1 | 0,1,8 |
| 3 | 2 | 0,1,8 |
| 4 | 2 | 2,3,10 |
| 5-15 | Reserved | Reserved |

# FIG. 21

Table U-41: Antenna port(s), transform precoder is disabled,
dmrs-Type= eType1, maxLength=1, rank = 4

| Value | Number of DMRS CDM group(s) without data | DMRS port(s) |
|-------|-------------------------------------------|--------------|
| 0 | 2 | 0-3 |
| 1 | 2 | 8-11 |
| 2 | 1 | 0,1,8,9 |
| 3 | 2 | 0,1,8,9 |
| 4 | 2 | 2,3,10,11 |
| 5-15 | Reserved | Reserved |

# FIG. 22

Table U-42: Antenna port(s), transform precoder is disabled,
dmrs-Type= eType1, maxLength=1, rank = 5

| Value | Number of DMRS CDM group(s) without data | DMRS port(s) |
|-------|------------------------------------------|--------------|
| 0 | 2 | 0,1,2,3,8 |
| 1 | | |
| 2 | | |
| 3 | | |
| ... | | |
| 15 | | |

# FIG. 23

Table U-43: Antenna port(s), transform precoder is disabled,
dmrs-Type= eType1, maxLength=1, rank = 6

| Value | Number of DMRS CDM group(s) without data | DMRS port(s) |
|---|---|---|
| 0 | 2 | 0,1,2,3,8,10 |
| 1 | | |
| 2 | | |
| 3 | | |
| ... | | |
| 15 | | |

# FIG. 24

Table U-44: Antenna port(s), transform precoder is disabled,
dmrs-Type= eType1, maxLength=1, rank = 7

| Value | Number of DMRS CDM group(s) without data | DMRS port(s) |
|-------|------------------------------------------|--------------|
| 0 | 2 | 0,1,2,3,8,9,10 |
| 1 | | |
| 2 | | |
| 3 | | |
| ... | | |
| 15 | | |

# FIG. 25

Table U-45: Antenna port(s), transform precoder is disabled,
dmrs-Type= eType1, maxLength=1, rank = 8

| Value | Number of DMRS CDM group(s) without data | DMRS port(s) |
|---|---|---|
| 0 | 2 | 0,1,2,3,8,9,10,11 |
| 1 | | |
| 2 | | |
| 3 | | |
| ... | | |
| 15 | | |

FIG. 26

Table U-46: Antenna port(s), transform precoder is disabled,
dmrs-Type=eType1, maxLength=2, rank = 1

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 | 1 | 8 | 1 |
| 15 | 1 | 9 | 1 |
| 16 | 2 | 8 | 1 |
| 17 | 2 | 9 | 1 |
| 18 | 2 | 10 | 1 |
| 19 | 2 | 11 | 1 |
| 20 | 2 | 8 | 2 |
| 21 | 2 | 9 | 2 |
| 22 | 2 | 10 | 2 |
| 23 | 2 | 11 | 2 |
| 24 | 2 | 12 | 2 |
| 25 | 2 | 13 | 2 |
| 26 | 2 | 14 | 2 |
| 27 | 2 | 15 | 2 |
| 28 | 1 | 0 | 2 |
| 29 | 1 | 1 | 2 |
| 30 | 1 | 8 | 2 |
| 31 | 1 | 9 | 2 |

FIG. 27

Table U-47: Antenna port(s), transform precoder is disabled,
dmrs-Type= eType1, maxLength=2, rank = 2

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10 | 1 | 8,9 | 1 |
| 11 | 2 | 8,9 | 1 |
| 12 | 2 | 10,11 | 1 |
| [13 | 2 | 8,10 | 1] |
| 14 | 2 | 8,9 | 2 |
| 15 | 2 | 10,11 | 2 |
| 16 | 2 | 12,13 | 2 |
| 17 | 2 | 14,15 | 2 |
| [18 | 2 | 8,12 | 2] |
| [19 | 2 | 10,14 | 2] |
| 20 | 2 | 9,11 | 1 |
| [21 | 2 | 1,3 | 1] |
| [22 | 2 | 0,2 | 2] |
| [23 | 2 | 1,3 | 2] |
| [24 | 2 | 4,6 | 2] |
| [25 | 2 | 5,7 | 2] |
| [26 | 2 | 8,10 | 2] |
| [27 | 2 | 9,11 | 2] |
| [28 | 2 | 12,14 | 2] |
| [29 | 2 | 13,15 | 2] |
| 30 | 1 | 0,1 | 2 |
| 31 | 1 | 8,9 | 2 |
| 32 | 1 | 4,5 | 2 |
| 33 | 1 | 12,13 | 2 |

FIG. 28

Table U-48: Antenna port(s), transform precoder is disabled,
dmrs-Type= eType1, maxLength=2, rank = 3

| Value | Number of DMRS CDM group(s) without data | DMRS port(s) | Number of front-load symbols |
|---|---|---|---|
| 0 | 2 | 0-2 | 1 |
| 1 | 2 | 0,1,4 | 2 |
| 2 | 2 | 2,3,6 | 2 |
| [3 | 2 | 8-10 | 1] |
| [4 | 2 | 8,9,12 | 2] |
| [5 | 2 | 10,11,14 | 2] |
| 6 | 1 | 0,1,8 | 1 |
| 7 | 2 | 0,1,8 | 1 |
| 8 | 2 | 2,3,10 | 1 |
| [9 | 1 | 0,1,8 | 2] |
| [10 | 1 | 4,5,12 | 2] |
| [11 | 2 | 0,1,8 | 2] |
| [12 | 2 | 4,5,12 | 2] |
| [13 | 2 | 2,3,10 | 2] |
| [14 | 2 | 6,7,14 | 2] |
| 15 | 2 | 5,8,9 | 2 |
| 16 | 2 | 7,10,11 | 2 |
| 17 | 2 | 7,12,13 | 2 |
| 18-31 | Reserved | Reserved | Reserved |

FIG. 29

Table U-49: Antenna port(s), transform precoder is disabled,
dmrs-Type= eType1, maxLength=2, rank = 4

| Value | Number of DMRS CDM group(s) without data | DMRS port(s) | Number of front-load symbols |
|-------|------------------------------------------|--------------|------------------------------|
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| [4 | 2 | 8-11 | 1] |
| 5 | 2 | 8,9,12,13 | 2 |
| 6 | 2 | 10,11,14,15 | 2 |
| [7 | 2 | 8,10,12,14 | 2] |
| 8 | 1 | 0,1,8,9 | 1 |
| 9 | 2 | 0,1,8,9 | 1 |
| 10 | 2 | 2,3,10,11 | 1 |
| [11 | 1 | 0,1,8,9 | 2] |
| [12 | 1 | 4,5,12,13 | 2] |
| [13 | 2 | 0,1,8,9 | 2] |
| [14 | 2 | 4,5,12,13 | 2] |
| [15 | 2 | 2,3,10,11 | 2] |
| [16 | 2 | 6,7,14,15 | 2] |
| 17-31 | Reserved | Reserved | Reserved |

FIG. 30

Table U-50: Antenna port(s), transform precoder is disabled,
dmrs-Type= eType1, maxLength=2, rank = 5

| Value | Number of DMRS CDM group(s) without data | DMRS port(s) | Number of front-load symbols |
|---|---|---|---|
| 0 | 2 | 0-4 | 2 |
| 1 | 2 | 0,1,2,3,8 | 1 |
| 2 | 1 | 0,1,4,5,8 | 2 |
| 3 | 2 | 0,1,4,5,8 | 2 |
| 4 | | | |
| 5 | | | |
| 6 | | | |
| 7 | | | |
| 8 | | | |
| 9 | | | |
| 10 | | | |
| 11 | | | |
| 12 | | | |
| 13 | | | |
| 14 | | | |
| 15 | | | |
| ... | | | |
| 31 | | | |

FIG. 31

Table U-51: Antenna port(s), transform precoder is disabled,
dmrs-Type= eType1, maxLength=2, rank = 6

| Value | Number of DMRS CDM group(s) without data | DMRS port(s) | Number of front-load symbols |
|-------|-------------------------------------------|--------------|------------------------------|
| 0 | 2 | 0,1,2,3,4,6 | 2 |
| 1 | 2 | 0,1,2,3,8,10 | 1 |
| 2 | 1 | 0,1,4,5,8,12 | 2 |
| 3 | 2 | 0,1,4,5,8,12 | 2 |
| 4 | | | |
| 5 | | | |
| 6 | | | |
| 7 | | | |
| 8 | | | |
| 9 | | | |
| 10 | | | |
| 11 | | | |
| 12 | | | |
| 13 | | | |
| 14 | | | |
| 15 | | | |
| ... | | | |
| 31 | | | |

FIG. 32

Table U-52: Antenna port(s), transform precoder is disabled,
dmrs-Type= eType1, maxLength=2, rank = 7

| Value | Number of DMRS CDM group(s) without data | DMRS port(s) | Number of front-load symbols |
|---|---|---|---|
| 0 | 2 | 0,1,2,3,4,5,6 | 2 |
| 1 | 2 | 0,1,2,3,8,9,10 | 1 |
| 2 | 1 | 0,1,4,5,8,9,12 | 2 |
| 3 | 2 | 0,1,4,5,8,9,12 | 2 |
| 4 | | | |
| 5 | | | |
| 6 | | | |
| 7 | | | |
| 8 | | | |
| 9 | | | |
| 10 | | | |
| 11 | | | |
| 12 | | | |
| 13 | | | |
| 14 | | | |
| 15 | | | |
| ... | | | |
| 31 | | | |

FIG. 33

Table U-53: Antenna port(s), transform precoder is disabled,
dmrs-Type= eType1, maxLength=2, rank = 8

| Value | Number of DMRS CDM group(s) without data | DMRS port(s) | Number of front-load symbols |
|---|---|---|---|
| 0 | 2 | 0,1,2,3,4,5,6,7 | 2 |
| 1 | 2 | 0,1,2,3,8,9,10,11 | 1 |
| 2 | 1 | 0,1,4,5,8,9,12,13 | 2 |
| 3 | 2 | 0,1,4,5,8,9,12,13 | 2 |
| 4 | | | |
| 5 | | | |
| 6 | | | |
| 7 | | | |
| 8 | | | |
| 9 | | | |
| 10 | | | |
| 11 | | | |
| 12 | | | |
| 13 | | | |
| 14 | | | |
| 15 | | | |
| ... | | | |
| 31 | | | |

FIG. 34

Table U-54: Antenna port(s), transform precoder is disabled,
dmrs-Type=eType2, maxLength=1, rank = 1

| Value | Number of DMRS CDM group(s) without data | DMRS port(s) |
|-------|-------------------------------------------|--------------|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12 | 1 | 12 |
| 13 | 1 | 13 |
| 14 | 2 | 12 |
| 15 | 2 | 13 |
| 16 | 2 | 14 |
| 17 | 2 | 15 |
| 18 | 3 | 12 |
| 19 | 3 | 13 |
| 20 | 3 | 14 |
| 21 | 3 | 15 |
| 22 | 3 | 16 |
| 23 | 3 | 17 |
| 24-31 | Reserved | Reserved |

FIG. 35

Table U-55: Antenna port(s), transform precoder is disabled,
dmrs-Type= eType2, maxLength=1, rank = 2

| Value | Number of DMRS CDM group(s) without data | DMRS port(s) |
|-------|-------------------------------------------|--------------|
| 0 | 1 | 0,1 |
| 1 | 2 | 0,1 |
| 2 | 2 | 2,3 |
| 3 | 3 | 0,1 |
| 4 | 3 | 2,3 |
| 5 | 3 | 4,5 |
| 6 | 2 | 0,2 |
| 7 | 1 | 12,13 |
| 8 | 2 | 12,13 |
| 9 | 2 | 14,15 |
| 10 | 3 | 12,13 |
| 11 | 3 | 14,15 |
| 12 | 3 | 16,17 |
| [13 | 2 | 12,14] |
| 14 | 3 | 13,15 |
| 15 | 2 | 13,15 |
| 16-31 | Reserved | Reserved |

FIG. 36

Table U-56: Antenna port(s), transform precoder is disabled,
dmrs-Type= eType2, maxLength=1, rank = 3

| Value | Number of DMRS CDM group(s) without data | DMRS port(s) |
|---|---|---|
| 0 | 2 | 0-2 |
| 1 | 3 | 0-2 |
| 2 | 3 | 3-5 |
| [3 | 2 | 12-14] |
| [4 | 3 | 12-14] |
| [5 | 3 | 15-17] |
| 6 | 1 | 0,1,12 |
| 7 | 2 | 0,1,12 |
| 8 | 2 | 2,3,14 |
| 9 | 3 | 0,1,12 |
| 10 | 3 | 2,3,14 |
| 11 | 3 | 4,5,16 |
| 12 | 3 | 13,15,17 |
| 13-31 | Reserved | Reserved |

# FIG. 37

Table U-57: Antenna port(s), transform precoder is disabled,
dmrs-Type= eType2, maxLength=1, rank = 4

| Value | Number of DMRS CDM group(s) without data | DMRS port(s) |
|---|---|---|
| 0 | 2 | 0-3 |
| 1 | 3 | 0-3 |
| [2 | 2 | 12-15] |
| [3 | 3 | 12-15] |
| 4 | 1 | 0,1,12,13 |
| 5 | 2 | 0,1,12,13 |
| 6 | 2 | 2,3,14,15 |
| 7 | 3 | 0,1,12,13 |
| 8 | 3 | 2,3,14,15 |
| 9 | 3 | 4,5,16,17 |
| 10-31 | Reserved | Reserved |

FIG. 38

Table U-58: Antenna port(s), transform precoder is disabled,
dmrs-Type= eType2, maxLength=1, rank = 5

| Value | Number of DMRS CDM group(s) without data | DMRS port(s) |
|---|---|---|
| 0 | 3 | 0-4 |
| 1 | 2 | 0,1,2,3,12 |
| 2 | 3 | 0,1,2,3,12 |
| 3 | | |
| 4 | | |
| 5 | | |
| 6 | | |
| 7 | | |
| 8 | | |
| … | | |
| 31 | | |

FIG. 39

Table U-59: Antenna port(s), transform precoder is disabled,
dmrs-Type= eType2, maxLength=1, rank = 6

| Value | Number of DMRS CDM group(s) without data | DMRS port(s) |
|---|---|---|
| 0 | 3 | 0-5 |
| 1 | 2 | 0,1,2,3,12,14 |
| 2 | 3 | 0,1,2,3,12,14 |
| 3 | | |
| 4 | | |
| 5 | | |
| 6 | | |
| 7 | | |
| 8 | | |
| ... | | |
| 31 | | |

# FIG. 40

Table U-60: Antenna port(s), transform precoder is disabled,
dmrs-Type= eType2, maxLength=1, rank = 7

| Value | Number of DMRS CDM group(s) without data | DMRS port(s) |
|---|---|---|
| 0 | 2 | 0-3,12-14 |
| 1 | 3 | 0-3,12-14 |
| 2 | | |
| 3 | | |
| 4 | | |
| 5 | | |
| 6 | | |
| 7 | | |
| 8 | | |
| ... | | |
| 31 | | |

# FIG. 41

Table U-61: Antenna port(s), transform precoder is disabled,
dmrs-Type= eType2, maxLength=1, rank = 8

| Value | Number of DMRS CDM group(s) without data | DMRS port(s) |
|---|---|---|
| 0 | 2 | 0-3,12-15 |
| 1 | 3 | 0-3,12-15 |
| 2 | | |
| 3 | | |
| 4 | | |
| 5 | | |
| 6 | | |
| 7 | | |
| 8 | | |
| ... | | |
| 31 | | |

FIG. 42

Table U-62: Antenna port(s), transform precoder is disabled,
dmrs-Type=eType2, maxLength=2, rank = 1

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28 | 1 | 12 | 1 |
| 29 | 1 | 13 | 1 |

FIG. 43

| 30 | 2 | 12 | 1 |
|---|---|---|---|
| 31 | 2 | 13 | 1 |
| 32 | 2 | 14 | 1 |
| 33 | 2 | 15 | 1 |
| 34 | 3 | 12 | 1 |
| 35 | 3 | 13 | 1 |
| 36 | 3 | 14 | 1 |
| 37 | 3 | 15 | 1 |
| 38 | 3 | 16 | 1 |
| 39 | 3 | 17 | 1 |
| 40 | 3 | 12 | 2 |
| 41 | 3 | 13 | 2 |
| 42 | 3 | 14 | 2 |
| 43 | 3 | 15 | 2 |
| 44 | 3 | 16 | 2 |
| 45 | 3 | 17 | 2 |
| 46 | 3 | 18 | 2 |
| 47 | 3 | 19 | 2 |
| 48 | 3 | 20 | 2 |
| 49 | 3 | 21 | 2 |
| 50 | 3 | 22 | 2 |
| 51 | 3 | 24 | 2 |
| 52 | 1 | 12 | 2 |
| 53 | 1 | 13 | 2 |
| 54 | 1 | 18 | 2 |
| 55 | 1 | 19 | 2 |
| 56-63 | Reserved | Reserved | Reserved |

FIG. 44

Table U-63: Antenna port(s), transform precoder is disabled,
dmrs-Type= eType2, maxLength=2, rank = 2

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 3 | 0,1 | 1 |
| 4 | 3 | 2,3 | 1 |
| 5 | 3 | 4,5 | 1 |
| 6 | 2 | 0,2 | 1 |
| 7 | 3 | 0,1 | 2 |
| 8 | 3 | 2,3 | 2 |
| 9 | 3 | 4,5 | 2 |
| 10 | 3 | 6,7 | 2 |
| 11 | 3 | 8,9 | 2 |
| 12 | 3 | 10,11 | 2 |
| 13 | 1 | 0,1 | 2 |
| 14 | 1 | 6,7 | 2 |
| 15 | 2 | 0,1 | 2 |
| 16 | 2 | 2,3 | 2 |
| 17 | 2 | 6,7 | 2 |
| 18 | 2 | 8,9 | 2 |
| 19 | 1 | 12,13 | 1 |
| 20 | 2 | 12,13 | 1 |
| 21 | 2 | 14,15 | 1 |
| 22 | 3 | 12,13 | 1 |
| 23 | 3 | 14,15 | 1 |
| 24 | 3 | 16,17 | 1 |
| [25 | 2 | 12,14 | 1] |
| 26 | 3 | 12,13 | 2 |
| 27 | 3 | 14,15 | 2 |
| 28 | 3 | 16,17 | 2 |
| 29 | 3 | 18,19 | 2 |
| 30 | 3 | 20,21 | 2 |
| 31 | 3 | 22,23 | 2 |

FIG. 45

| 32 | 1 | 12,13 | 2 |
|---|---|---|---|
| 33 | 1 | 18,19 | 2 |
| 34 | 2 | 12,13 | 2 |
| 35 | 2 | 14,15 | 2 |
| 36 | 2 | 18,19 | 2 |
| 37 | 2 | 20,21 | 2 |
| 38 | 3 | 13,15 | 1 |
| 39 | 2 | 13,15 | 1 |
| 40-63 | Reserved | Reserved | Reserved |

FIG. 46

Table U-64: Antenna port(s), transform precoder is disabled,
dmrs-Type= eType2, maxLength=2, rank = 3

| Value | Number of DMRS CDM group(s) without data | DMRS port(s) | Number of front-load symbols |
|---|---|---|---|
| 0 | 2 | 0-2 | 1 |
| 1 | 3 | 0-2 | 1 |
| 2 | 3 | 3-5 | 1 |
| 3 | 3 | 0,1,6 | 2 |
| 4 | 3 | 2,3,8 | 2 |
| 5 | 3 | 4,5,10 | 2 |
| [6 | 2 | 12-14 | 1] |
| [7 | 3 | 12-14 | 1] |
| [8 | 3 | 15-17 | 1] |
| [9 | 3 | 12,13,18 | 2] |
| [10 | 3 | 14,15,20 | 2] |
| [11 | 3 | 16,17,22 | 2] |
| 12 | 1 | 0,1,12 | 1 |
| 13 | 2 | 0,1,12 | 1 |
| 14 | 2 | 2,3,14 | 1 |
| 15 | 3 | 0,1,12 | 1 |
| 16 | 3 | 2,3,14 | 1 |
| 17 | 3 | 4,5,16 | 1 |
| [18 | 1 | 0,1,12 | 2] |
| [19 | 1 | 6,7,18 | 2] |
| [20 | 2 | 0,1,12 | 2] |
| [21 | 2 | 6,7,18 | 2] |
| [22 | 2 | 2,3,14 | 2] |
| [23 | 2 | 8,9,20 | 2] |
| [24 | 3 | 0,1,12 | 2] |
| [25 | 3 | 6,7,18 | 2] |
| [26 | 3 | 2,3,14 | 2] |
| [27 | 3 | 8,9,20 | 2] |
| [28 | 3 | 4,5,16 | 2] |
| [29 | 3 | 10,11,22 | 2] |

# FIG. 47

| 30 | 3 | 7,12,13 | 2 |
|----|---|---------|---|
| 31 | 3 | 9,14,15 | 2 |
| 32 | 3 | 11,16,17 | 2 |
| 33 | 3 | 9,18,19 | 2 |
| 34 | 3 | 18,19,20 | 2 |
| 35 | 3 | 21,22,23 | 2 |
| 36 | 3 | 13,15,17 | 1 |
| 37-63 | Reserved | Reserved | Reserved |

FIG. 48

Table U-65: Antenna port(s), transform precoder is disabled,
dmrs-Type= eType2, maxLength=2, rank = 4

| Value | Number of DMRS CDM group(s) without data | DMRS port(s) | Number of front-load symbols |
|---|---|---|---|
| 0 | 2 | 0-3 | 1 |
| 1 | 3 | 0-3 | 1 |
| 2 | 3 | 0,1,6,7 | 2 |
| 3 | 3 | 2,3,8,9 | 2 |
| 4 | 3 | 4,5,10,11 | 2 |
| [5 | 2 | 12-15 | 1] |
| [6 | 3 | 12-15 | 1] |
| 7 | 3 | 12,13,18,19 | 2 |
| 8 | 3 | 14,15,20,21 | 2 |
| 9 | 3 | 16,17,22,23 | 2 |
| 10 | 1 | 0,1,12,13 | 1 |
| 11 | 2 | 0,1,12,13 | 1 |
| 12 | 2 | 2,3,14,15 | 1 |
| 13 | 3 | 0,1,12,13 | 1 |
| 14 | 3 | 2,3,14,15 | 1 |
| 15 | 3 | 4,5,16,17 | 1 |
| [16 | 1 | 0,1,12,13 | 2] |
| [17 | 1 | 6,7,18,19 | 2] |
| [18 | 2 | 0,1,12,13 | 2] |
| [19 | 2 | 6,7,18,19 | 2] |
| [20 | 2 | 2,3,14,15 | 2] |
| [21 | 2 | 8,9,20,21 | 2] |
| [22 | 3 | 0,1,12,13 | 2] |
| [23 | 3 | 6,7,18,19 | 2] |
| [24 | 3 | 2,3,14,15 | 2] |
| [25 | 3 | 8,9,20,21 | 2] |
| [26 | 3 | 4,5,16,17 | 2] |
| [27 | 3 | 10,11,22,23 | 2] |
| 28-63 | Reserved | Reserved | Reserved |

FIG. 49

Table U-66: Antenna port(s), transform precoder is disabled,
dmrs-Type= eType2, maxLength=2, rank = 5

| Value | Number of DMRS CDM group(s) without data | DMRS port(s) | Number of front-load symbols |
|---|---|---|---|
| 0 | 3 | 0-4 | 1 |
| 1 | 2 | 0,1,2,3,6 | 2 |
| 2 | 2 | 0,1,2,3,12 | 1 |
| 3 | 3 | 0,1,2,3,12 | 1 |
| 4 | 1 | 0,1,6,7,12 | 2 |
| 5 | 2 | 0,1,6,7,12 | 2 |
| 6 | 3 | 0,1,6,7,12 | 2 |
| 7 | | | |
| 8 | | | |
| 9 | | | |
| 10 | | | |
| 11 | | | |
| 12 | | | |
| 13 | | | |
| ... | | | |
| 63 | | | |

FIG. 50

Table U-67: Antenna port(s), transform precoder is disabled,
dmrs-Type= eType2, maxLength=2, rank = 6

| Value | Number of DMRS CDM group(s) without data | DMRS port(s) | Number of front-load symbols |
|---|---|---|---|
| 0 | 3 | 0-5 | 1 |
| 1 | 2 | 0,1,2,3,6,8 | 2 |
| 2 | 2 | 0-3,12,14 | 1 |
| 3 | 3 | 0-3,12,14 | 1 |
| 4 | 1 | 0,1,6,7,12,18 | 2 |
| 5 | 2 | 0,1,6,7,12,18 | 2 |
| 6 | 3 | 0,1,6,7,12,18 | 2 |
| 7 | | | |
| 8 | | | |
| 9 | | | |
| 10 | | | |
| 11 | | | |
| 12 | | | |
| 13 | | | |
| ... | | | |
| 63 | | | |

FIG. 51

Table U-68: Antenna port(s), transform precoder is disabled,
dmrs-Type= eType2, maxLength=2, rank = 7

| Value | Number of DMRS CDM group(s) without data | DMRS port(s) | Number of front-load symbols |
|---|---|---|---|
| 0 | 2 | 0,1,2,3,6,7,8 | 2 |
| 1 | 2 | 0-3,12-14 | 1 |
| 2 | 3 | 0-3,12-14 | 1 |
| 3 | 1 | 0,1,6,7,12,13,18 | 2 |
| 4 | 2 | 0,1,6,7,12,13,18 | 2 |
| 5 | 3 | 0,1,6,7,12,13,18 | 2 |
| 6 | | | |
| 7 | | | |
| 8 | | | |
| 9 | | | |
| 10 | | | |
| 11 | | | |
| 12 | | | |
| 13 | | | |
| ... | | | |
| 63 | | | |

FIG. 52

Table U-69: Antenna port(s), transform precoder is disabled,
dmrs-Type= eType2, maxLength=2, rank = 8

| Value | Number of DMRS CDM group(s) without data | DMRS port(s) | Number of front-load symbols |
|---|---|---|---|
| 0 | 2 | 0,1,2,3,6,7,8,9 | 2 |
| 1 | 2 | 0-3,12-15 | 1 |
| 2 | 3 | 0-3,12-15 | 1 |
| 3 | 1 | 0,1,6,7,12,13,18,19 | 2 |
| 4 | 2 | 0,1,6,7,12,13,18,19 | 2 |
| 5 | 3 | 0,1,6,7,12,13,18,19 | 2 |
| 6 | | | |
| 7 | | | |
| 8 | | | |
| 9 | | | |
| 10 | | | |
| 11 | | | |
| 12 | | | |
| 13 | | | |
| ... | | | |
| 63 | | | |

FIG. 53

FIG. 54

FIG. 55

EP 4 776 732 A1

FIG. 56

BASE STATION 10, USER TERINAL 20

1001

PROCESSOR

1007

COMMUNICATION
APPARATUS

1004

1002

MEMORY

1005

INPUT
APPARATUS

1003

STORAGE

1006

OUTPUT
APPARATUS

FIG. 57

FIG. 58

## INTERNATIONAL SEARCH REPORT

International application No.

**PCT/JP2023/032569**

### A. CLASSIFICATION OF SUBJECT MATTER

*H04W 72/232*(2023.01)i; *H04W 16/28*(2009.01)i; *H04W 72/044*(2023.01)i
FI:  H04W72/232; H04W72/044 110; H04W16/28

According to International Patent Classification (IPC) or to both national classification and IPC

### B. FIELDS SEARCHED

Minimum documentation searched (classification system followed by classification symbols)

H04W72/232; H04W16/28; H04W72/044

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | Huawei, HiSilicon, Discussion on DMRS enhancements in Rel-18, 3GPP TSG-RAN WG1 Meeting #112bis-e R1-2302373, 07 April 2023, pp. 1-16<br>chapter 1, 2.1, 2.2, 2.5 | 1-6 |
| A | WO 2023/142010 A1 (ZTE CORPORATION) 03 August 2023 (2023-08-03)<br>p. 40, line 20 - p. 44, line 2 | 1-6 |

| ☐ Further documents are listed in the continuation of Box C. | ☑ See patent family annex. |

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/032569**

| Patent document cited in search report | Publication date (day/month/year) | Patent family member(s) | Publication date (day/month/year) |
|---|---|---|---|
| WO 2023/142010 A1 | 03 August 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010